# EUROPEAN PATENT APPLICATION

(11) **EP 1 605 394 A2**
(43) Date of publication of application: **14.12.2005**
(21) Application number: 05253542.4
(22) Date of filing: 09.06.2005
(51) Int. Cl.: G06K 15/00, G06K 19/077, G06K 7/00, B41J 3/407

(54) **Apparatus and method for controlling an RFID printer system**

(30) Priority: 09.06.2004 US 578481 P
(71) Applicant: Printronix, Inc., Irvine, California 92606-1005 (US)
(72) Inventor: Korst, Roland, Vlijmen 5251 HA (NL); Visser, Jos, Zevenaar, 6905 AK (NL); Russens, Maarten, St MichielsGestel, 5271 GH (NL); Heessels, Frank, St MichielsGestel, 5271 NB (NL); Van Swaaij, Andre, 6652 EH Druten (NL); Fitzsimmons, David, Rancho Santa Margarita, CA 92688 (US); Van, Le L., Mission Viejo, California 92691 (US)
(74) Representative: Harland, Linda Jane

(57) **Abstract**

A printer system includes a general purpose input/output (GPIO) system that can be driven by any internal printing, encoding or verification event or by external events. Through a unique mapping capability the GPIO system can, through a series of logical functions, generate output events ("actions") to drive external devices or to control printer internal activities. In one embodiment, the GPIO detects the type of data stream and only the printer capable of using and printing with the data stream prints the job. Examples include an RFID-enabled printer and a bar code printer.

## Description

### RELATED APPLICATION

The present application is based on and claims priority to U.S. Provisional application Serial No. 60/578,481, filed June 9, 2004.

### BACKGROUND

### Field of Invention

The present invention relates generally to printer systems, and more particularly to managing multiple printers within a printer system.

### Related Art

A main function of printer systems is to deliver printed images. One example of printed images is bar code labels that are used in the supply chain for efficient processing and handling of goods in transit. Typically, a roll of media, such as labels, is inserted into a printer, and the labels are passed through a printing mechanism, such as a thermal print head. As each label passes, the printing mechanism prints an appropriate image, such as a bar code. The printed label can then be applied to a package if desired.

As label technology advances and needs increase, it becomes increasingly difficult for a single printer to process the media efficiently and correctly. For example, colors are now required for many labels. However, color printing using a single printer can be costly, difficult, and/or inefficient. Increasing throughput is always desirable, and as labels are becoming ever more complex, high throughput is becoming more difficult. Recent developments in technology now also allow Radio Frequency Identification (RFID) inlays (passive or active transponders) to be embedded in a bar code label. The transponder provides an electronic means of storing information and a non-contact, non-line of sight method for reading the stored data.

One common method for encoding RFID bar code labels is to use a printer/encoder. In such a system, an RFID encoder (sometimes called a reader) and antenna is integrated in the printer to enable both printing of the label information and programming of the RFID tag. RFID labels, such as for cartons or pallets, can be produced by embedding the RFID tag in a label, programming information into the tag, such as from a host computer, and based on the information, printing the label with a proper bar code and/or other printable information using the printer. RFID labels can also be produced in a printer by first printing on the label and then programming or encoding the RFID tag in the label. These labels can then be read by both a bar code scanner and an RFID reader.

However, many single printers are not capable of printing and encoding. Ones that are may not be overly efficient. Thus, there is a need for a printer system that is able to more efficiently handle today's printing requirements.

### SUMMARY

According to one aspect of the present invention, a printer system includes a general purpose input/output (GPIO) system that can be driven by any internal printing, encoding or verification event or by external events. Through a unique mapping capability the GPIO system can, through a series of logical functions, generate output events ("actions") to drive external devices or to control printer internal activities. Mapping of events to actions is done through an IO System Manager.

The GPIO system enables multiple printers to be coordinated so that a printer system comprising the GPIO system and multiple printers can be used to perform printing functions more efficiently. The GPIO system also enables functions with a single printer to be managed more effectively through the mapping to output events.

As a result of the programming flexibility of the GPIO system, it allows, among many other applications, full control of a label print-and-apply system by the printer. It does not necessarily require additional control devices, as the printer with its resident GPIO system can function as the device controlling the complete application.

Applications that do not need a direct interface to the outside can still benefit from the GPIO system. For example, a printer status reporting based on internal printer events can be done through the standard printer interfaces without additional hardware installed.

In one embodiment, the GPIO system manages two or more printers with a printer system. For example, two printers can be connected through the GPIO. One is designated as the system master, and the other one is designated as the slave. Both printers receive the same data, but the GPIO only instructs the master to print. If the master is able to successfully print, the slave discards the received data and the master continues printing.
However, if the master is unable to print successfully, the GPIO system will instruct the slave to print, such as initiating an exchange of master/slave designations between the printers. The slave continues printing until the problem with the master is fixed. At that time, printing is again performed by the master. This allows the user uninterrupted printing.

In another embodiment, The printers receive the same data, but only one of the printers will print, based on the data stream. For example, one printer can be an RFID printer that enables encoding and reading of RFID tags and printing of labels, while the other printer can be just a bar code printer. So, if the data stream contains an RFID command, the RFID enabled printer will print, while the bar code printer will discard the data. This enables a printer system to handle multiple types of printing without user intervention.

Another embodiment allows printers to print labels in sequence and in synchronization with packages or boxes passing by the printers on a conveyor belt system. The printers are interconnected through the GPIO system so that if one printer develops a problem, the conveyor belt can be slowed down so that printing can continue successfully using the remaining printers. When the problem is resolved, the speed is increased back to normal. This enables a labeling system to operate more quickly and efficiently.

In yet another embodiment, the GPIO system interconnects printers supporting different color printing, such as one printer for black and another for red. Each printer prints only the color of the loaded ribbon. After one color is printed, the label is moved to the next printer for printing another color. The GPIO system synchronizes the printing so that variations in speed to not adversely affect the overall printing. This enables multi-color labels to be printed quickly and at a lower cost.

This invention will be more fully understood in light of the following detailed description taken together with the accompanying drawings.

### BRIEF DESCRIPTION OF THE DRAWINGS

Fig. 1 is a block diagram of a GPIO system according to one embodiment of the present invention;

Fig. 2 is a block diagram of a GPIO hardware portion of the GPIO system of Fig. 1, according to one embodiment; and

Figs. 3 to 6 are flow charts illustrating applications of the GPIO system according to different embodiments.

Embodiments of the present invention and their advantages are best understood by referring to the detailed description that follows. It should be appreciated that like reference numerals are used to identify like elements illustrated in one or more of the figures.

### DETAILED DESCRIPTION

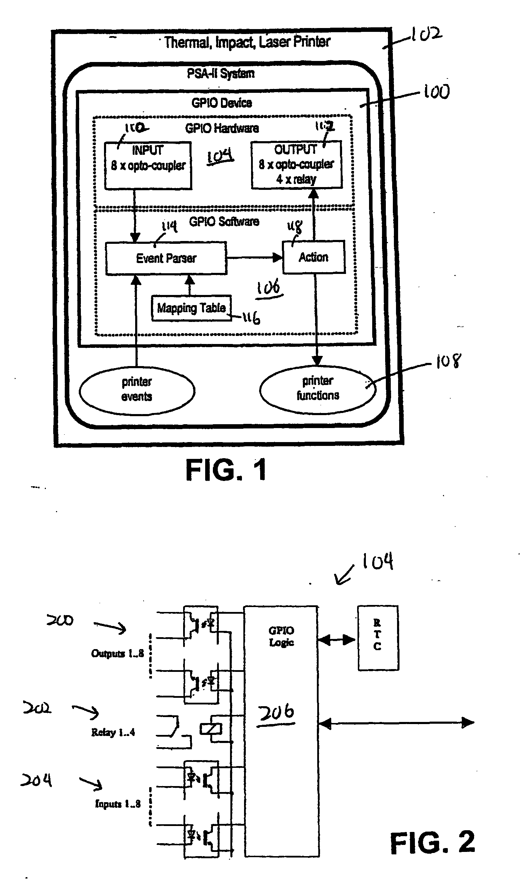

Fig. 1 is a block diagram of a general purpose input/output (GPIO) system 100 according to one embodiment, contained within a printer 102. Printer 102 can be any suitable printer, such as a thermal, laser, or impact printer. GPIO system 100 includes a GPIO hardware portion 104 and a GPIO software portion 106. GPIO software portion 106 communicates with a printer controller 108. The printer controller controls functions of a printer. So, in response to signals from GPIO software portion 106, printer controller 108 can send appropriate command instructions to the printer. GPIO hardware portion 104 can be an IO board mounted in the printer, and GPIO software portion 106 can be a PC-based GPIO manager that allows the user to define how the general purpose IO hardware should behave for a given application and a printer resident GPIO event parser.

GPIO hardware portion 104, e.g., a GPIO board, handles the actual interfacing of the printer to the outside world, i.e., external signals, components, and devices. Examples include interfaces to external devices such as sensors, conveyor systems, label applicators, pneumatic devices, etc. The interface includes an input section 110 comprising of eight optically isolated inputs and an output section 112 comprising of eight optically isolated outputs and four SPDT relay contacts. GPIO hardware portion 104 also includes power, such as a 24V DC and a 5V DC supply, for providing power to external devices.

Fig. 2 is a more detailed block diagram of GPIO hardware portion 104 having eight optically coupled outputs 200, four relay outputs 202, and eight optically coupled inputs 204. The opto-couplers, in one embodiment, comprise a GaAs LED and an NPN Silicon phototransistor, such as the NEC PS2501-4 opto-coupler. The relays, in one embodiment, are NAiS TX type relays. For simplicity, not all outputs and inputs are shown. The outputs 200 and 202 and inputs 204 are coupled to an IO system control logic 206. Logic 206 enables outputs 200 and inputs 206 to be connected to the printer system. Detailed description of the circuits, inputs, outputs, and relays can be found in Appendix B.

Referring back to Fig. 1, GPIO system 100 also includes GPIO software portion 106. GPIO software portion 106 includes an event parser 114, a mapping table 116, and an action portion 118. Also included is a software initiation section which sets up the hardware (hardware detection and initialization), sets up the mapping tables (internal and user-defined), and creates front panel menus. Event parser 114 parses events or events specified in the mapping table. For example, when event parser 114 receives an event, it will search the mapping table for action(s) associated with the event. Multiple actions can be linked to one event. If one or more actions are found, event parser 114 will execute them. The events can originate from various sources. These include the GPIO input section (inputs 204), events happening anywhere in the printer, and polling for certain conditions.

Mapping table 116 contains a list of so-called "Event to Action Mappings". There is one internal preset mapping table stored in the printer and one "user-defined" table can be downloaded to a flash file-system. Each mapping consists of the following parts: 1) a mapping name to describe the event to action mapping, 2) an event name to describe the event and an event ID to uniquely identify the event, and 3) an action name to describe the action, an action ID to uniquely identify the action, and action parameters for performing the action.

Action portion 118 communicates the desired or selected action to GPIO hardware portion 104 (through output section 112) and printer controller 108. Additional details on GPIO software portion 106 can be found in Appendices A and B.

Thus, event parser 112 uses events and actions to allow GPIO system 100 to behave as required. Events can either be printer internal, such as "paper out" or "print complete", or printer external, such as "opto-coupler 1 active". Actions are the result of (or the reaction to) an event and can also be printer internal like "paper feed" or printer external like "relay 1 active" or a "reply to host", where data is transmitted over either the serial, parallel, or network interface. A number of events can also be acted upon without the GPIO card being installed in the printer and enables the printer to be adapted for the application it is used in. Table 1 below lists available events according to one embodiment.

**Table 1**

| Events | Parameters |
|---|---|
| Input Opto-Coupler | Opto-Coupler Number (1..8), Active, Inactive |
| Printer Powered Up | n.a |
| Printer Online | n.a |
| Printer Offline | n.a |
| Printer Local | n.a |
| Power Save Mode Active | n.a |
| Power Save Mode Cleared | |
| Start Data Processing | n.a |
| End Data Processing | n.a |
| Printer Buffers Empty | n.a |
| Label Pending | n.a |
| Start Printing | n.a |
| Start Paper Move *(1)* | n.a |
| Label Printed | n.a |
| Label Present | n.a |
| Label Taken | n.a |
| Job Printed | n.a. |
| End Paper Move *(1)* | n.a |
| Printer Error | Any, Paper Out, Paper Jam, Ribbon Out, TOF Detect Fault, Print Head Open, RFD Tag failed, RFID max. retry |
| Printer Warning | Any, Ribbon Low |
| Panel Key Event | Key name |
| ODV Events | Missing barcode, Quality error - Any or a specific one, All ODV errors cleared |
| Data Field Changed | Field Id, Condition, Type |

An event is the moment in time when a listed signal changes state, e.g., the event "Printer On-Line" happens at the moment the printer is switching from the "Printer OffLine" state into the "Printer On-Line" state.

A number of events have parameters attached to them, e.g., to more specifically define the event to which the related action should be mapped. For example, the "Printer Error" event can have one of two forms, the first more generalized form in which the event happens on any printer error ("any" selected as parameter) or the more specific form in which, e.g., "paper out" is specified as the condition for this event ("paper out" selected as parameter).

Events can be mapped to actions. An action is that what should happen when the event occurs and can be either internal or external. With the exception of the Input events and Output actions, all events and actions can be used without the hardware installed. This allows, e.g., the Status Reporting capability of the General Purpose IO System to be used. Possible actions are listed in Table 2 below according to one embodiment.

**Table 2**

| Actions | Parameters |
|---|---|
| Output Opto-Coupler | Opto-Coupler Number (1..8), Activate, Deactivate, Pulse |
| Output Relay | Relay Number (1..4), Activate, Deactivate, Pulse |
| Printer Online | n.a |
| Printer Offline | n.a |
| On/Offline switch | n.a |
| Clear Buffer | n.a |
| Pause Printing | n.a |
| Start Printing | n.a |
| Print Next Label | n.a |
| Reprint Last Printed Label | n.a |
| Form Feed | n.a |
| Move Paper | TOF, Specified Distance Forward/Backward |
| Cut Once | n.a. |
| Delete Page | n.a. |
| Lock Operator Panel | n.a |
| Unlock Operator Panel | n.a |
| Key Events | n.a |
| Enable GPIO Events | n.a |
| Disable GPIO Events | n.a |
| Reply to Host | Data to be Transmitted, Interface to be used |
| Wait | Data Field, time in mS x50 |
| PAA control, Reset CST | n.a. |
| Select Mapping Table | Mapping Table ID |
| Data Field | Name, Operator, Type |
| Send Report | Name, Operator, Type |

An action is that what happens as a result of an event. For example, if the event "On-Line" is mapped to the action "Print Next Label", the printer will print a label as soon as it is switched to the On-Line state (and if a label is present in the buffer). Or, if a panel key event is mapped to the action "Cut Once", the panel key used now has a new function, the cutting of labels.

A number of actions have parameters attached to them, which can be used to more specifically define the action that should be executed. For example, the parameters related to the action "Move Paper" allow the movement to top of form (TOF) (either forward or reverse) or allow a specified distance to be moved forward or reverse.

Several actions can be mapped to a single event. A key event could be mapped such that it cuts the label just printed and also initiates the printing of the next label. Events can be mapped to actions. An action is that what should happen when the event occurs and can be either internal or external.

GPIO system 100 also includes a PC/Workstation based GPIO Manager. In one embodiment, this is the actual Windows or Unix based Graphical User Interface that allows the user to program the GPIO mapping tables. Each entry in the table has a description, an event and an action listed. The way in which this is designed makes the tables self-documenting.

Thus, GPIO system 100, through a mapping capability, can generate output events through a series of logical functions to drive any external device.

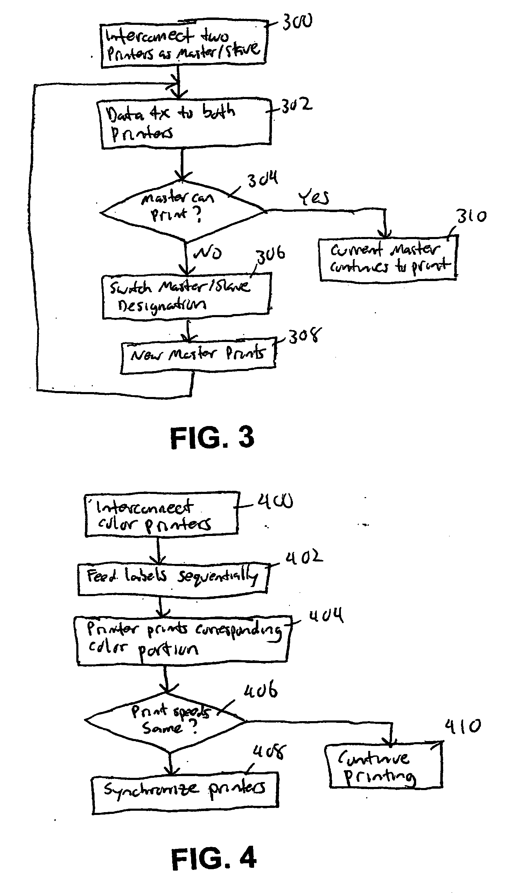

Figs. 3-6 are flow charts showing various embodiments for GPIO system 100 to generate different output events for improving printer performance. Fig. 3 illustrates a process for uninterrupted printing. In operation 300, two equivalent printers are interconnected through the GPIO system in a Master/Slave configuration. The same data is transmitted to both printers in operation 302. If the printer designated as the Master is unable to print, such as due to a damaged component, as determined in operation 304, the GPIO system will autonomously initiate an exchange of roles between the two printers such that the Slave printer will become Master in operation 306. The new Master then continues printing in operation 308. When the initial Master printer is able to print again, the initial Master is designated the Slave printer by the GPIO system. If the new Master develops a problem and cannot print, the new Slave is designated the Master and continues the print job. In this manner, the two printers alternate when one is unable to print. As a result, printing is uninterrupted.

The GPIO system also allows a problem status to be reported to a host computer system through any of the standard interfaces as well as to the operator either through a set of warning lights, sounds, through the printer resident LCD, or through a combination. If this application includes a print and apply system, the GPIO system can be used to control the applicator such that it will "know" which of the two printers has a valid label to apply.

Fig. 4 shows a process for color printing. In operation 400, multiple printers, each with a different color ribbon, are interconnected through the GPIO system. Media, such as a roll of labels, is fed from one printer to the next in operation 402. Each printer receives and prints, in operation 404, that part of the data that should be printed in the color of the loaded ribbon. The GPIO system then determines, in operation 406, whether the print speeds of the printers are the same. If not, the GPIO system synchronizes the printers in operation 408 to compensate for the differences, resulting in a uniform and high quality image. If the printers are all at the same print speed, printing continues in operation 410. All additional capabilities of the GPIO system, such as applicator control and status reporting will be available.

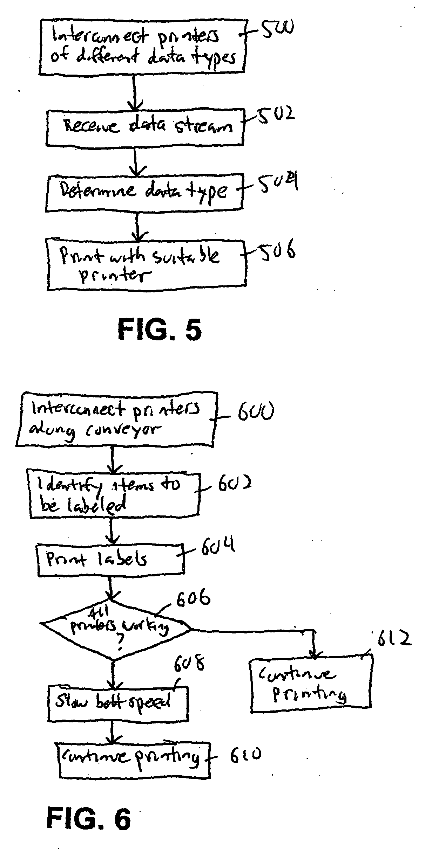

Fig. 5 illustrates a process for handling different types of print data. In operation 500, multiple printers each with different capabilities and different media are interconnected through the GPIO system. For example, one of the printers can be an RFID-enabled printer capable of reading and encoding RFID tags and labels. The RFID-enabled printer can also print bar code labels. The other printer can be a printer capable of printing only bar codes. Other types and numbers of printers can also be interconnected. Each printer in the system receives the same data in operation 502. The GPIO system, in operation 504, determines the data type from the data stream, such as by detecting an RFID command or other indicator. The GPIO system then commands only the printer capable of handling the data stream to operate on the data, such as RFID encoding. Thus, only one of the printers should, depending on the data stream content, print the job at hand in operation 506. The GPIO system, in combination with an application adapter, can be programmed such that only the printer that can handle the data received will print it. All additional capabilities of the GPIO system, such as applicator control and status reporting, will be available.

Fig. 6 illustrates a process for handling multiple printers in a conveyor belt print and apply system. In operation 600, multiple printers are interconnected through the GPIO system along a high speed conveyer belt. Optical sensors report, in operation 602, items to be labeled to the GPIO system, which in turn will make sure the labels are printed in the correct sequence. The labels are then printed in operation 604. If one of the printers in the system develops a problem, as determined in operation 606, the GPIO system lowers the speed of the conveyer belt and alarms the operator in operation 608. Printing continues at this slower speed, in operation 610, to prevent interruption or faulty printing. Following the resolution of the problem, the GPIO system will speed up the conveyer belt, and normal printing continues. If all printers are operating properly, normal printing conditions continue in operation 612. Additional capabilities of the GPIO system, such as status reporting, will be available.

Having thus described embodiments of the present invention, persons skilled in the art will recognize that changes may be made in form and detail without departing from the scope of the invention. Thus the invention is limited only by the following claims.

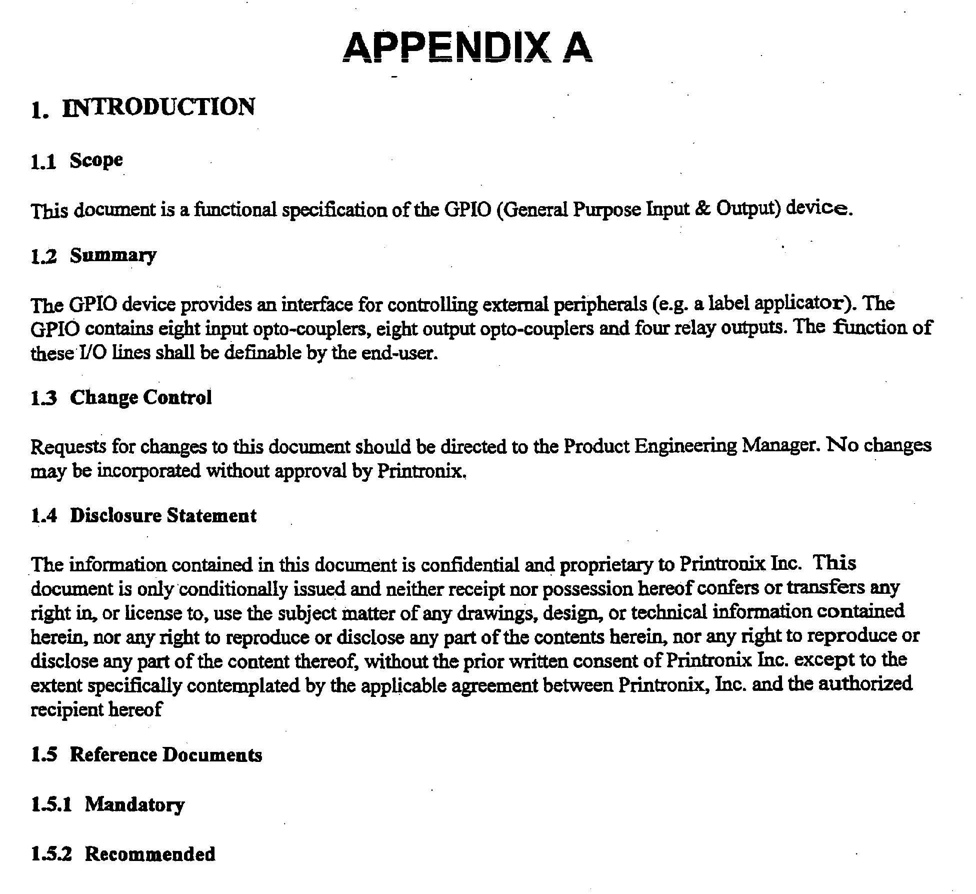

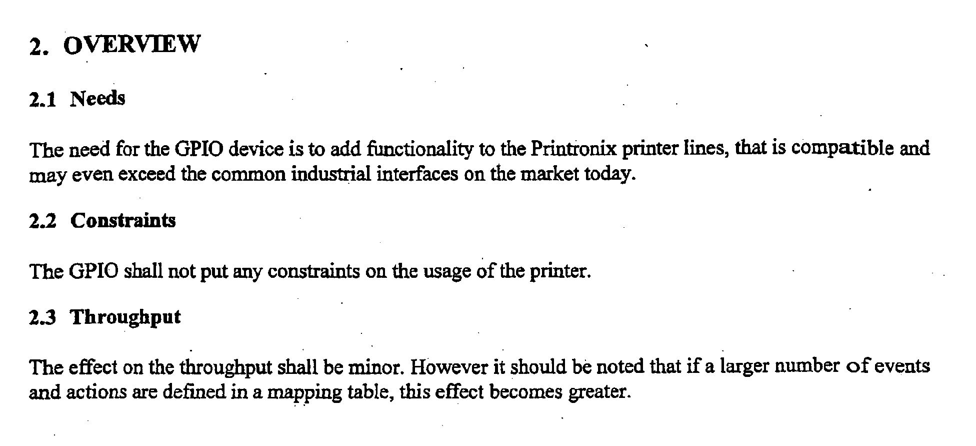

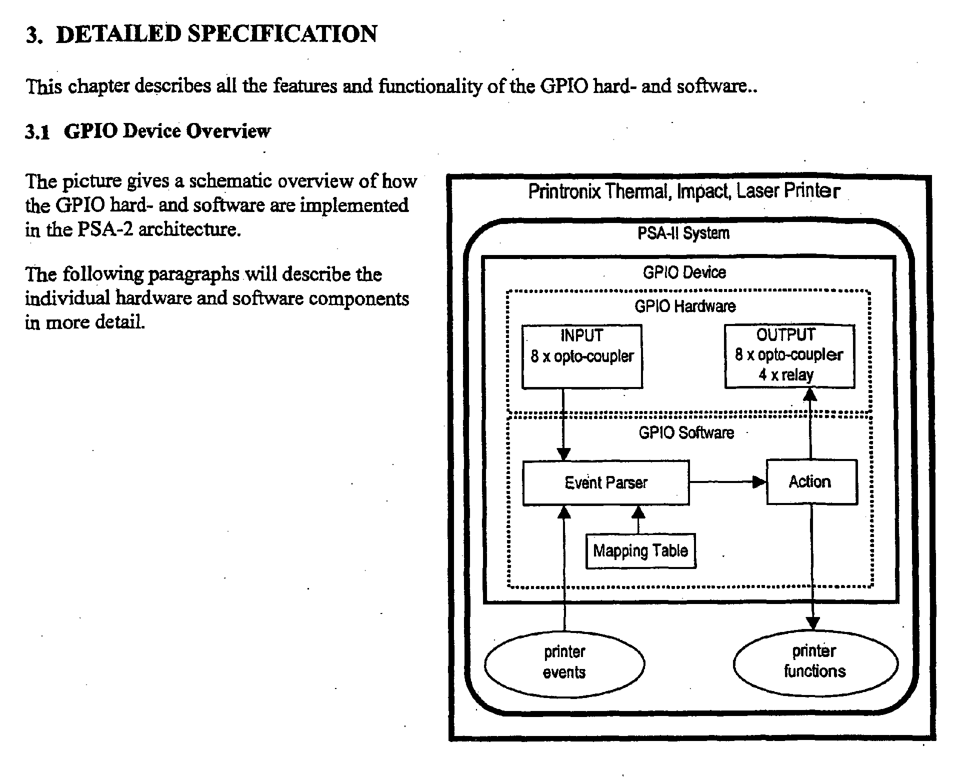

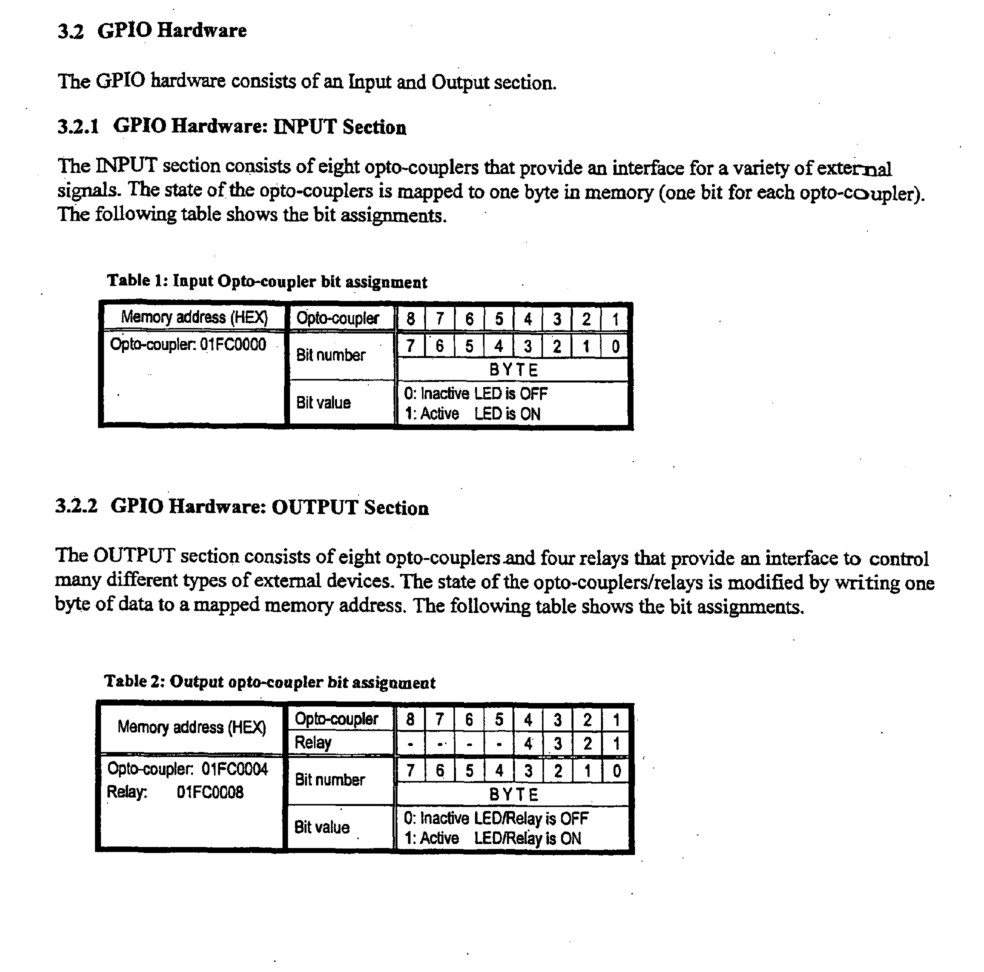

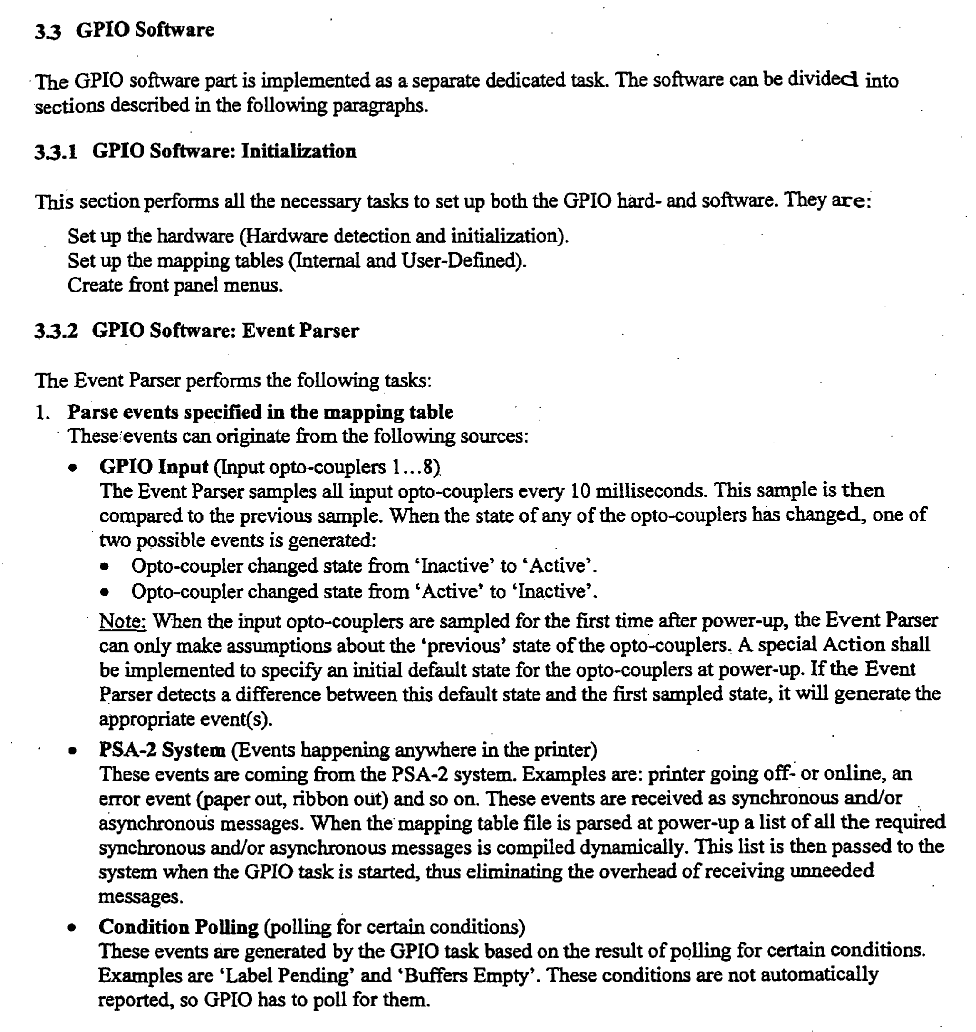

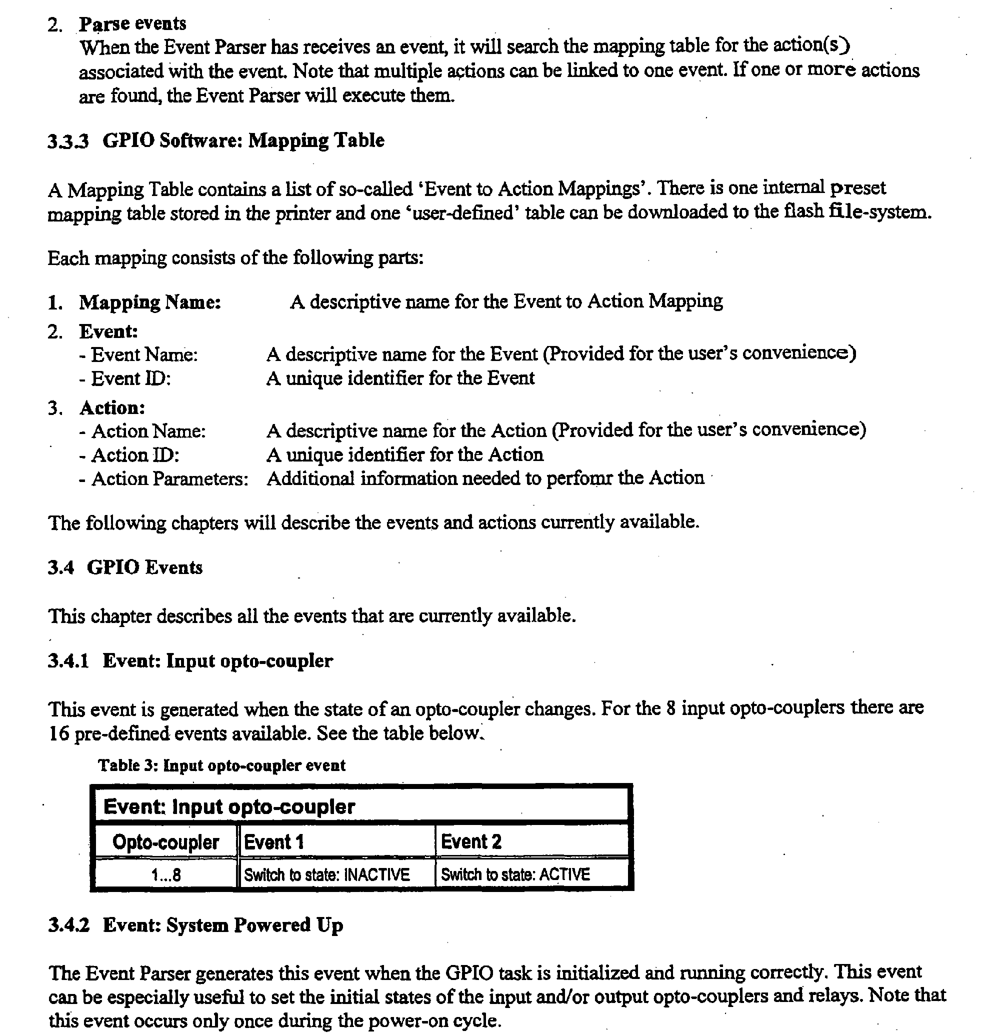

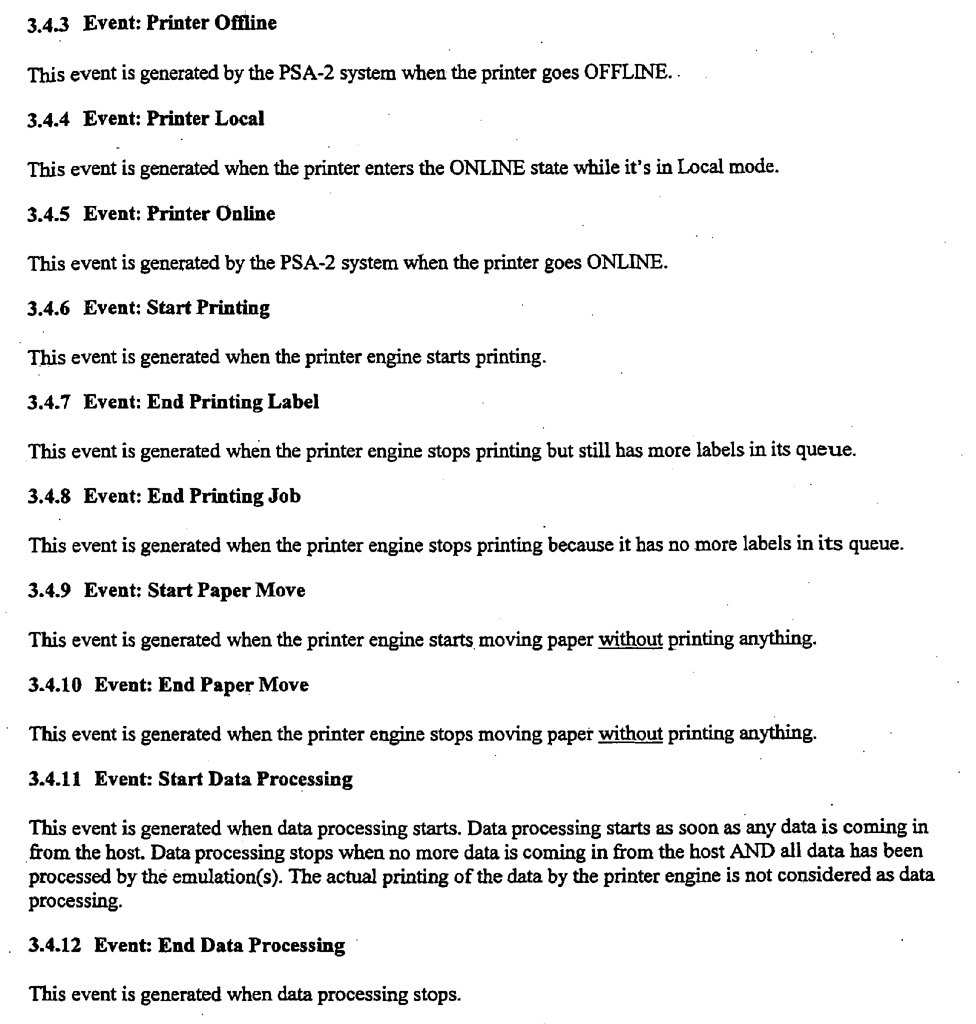

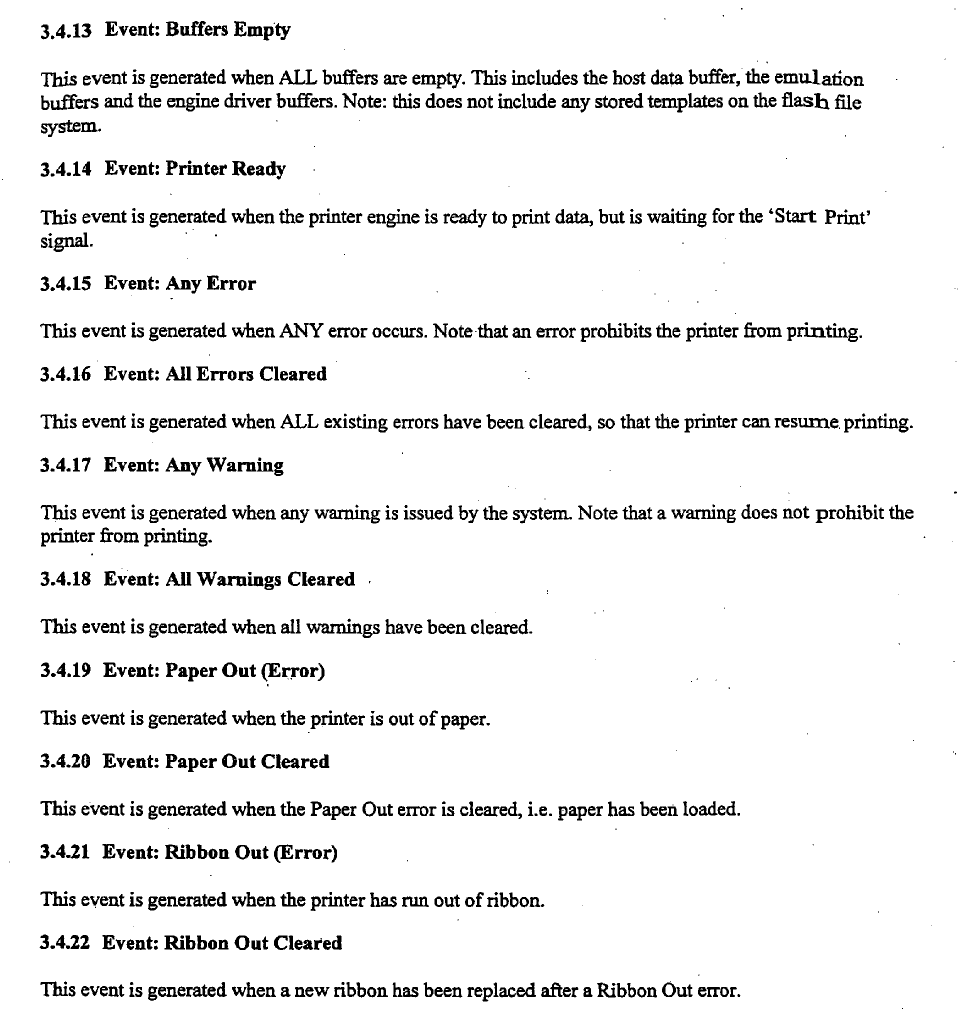

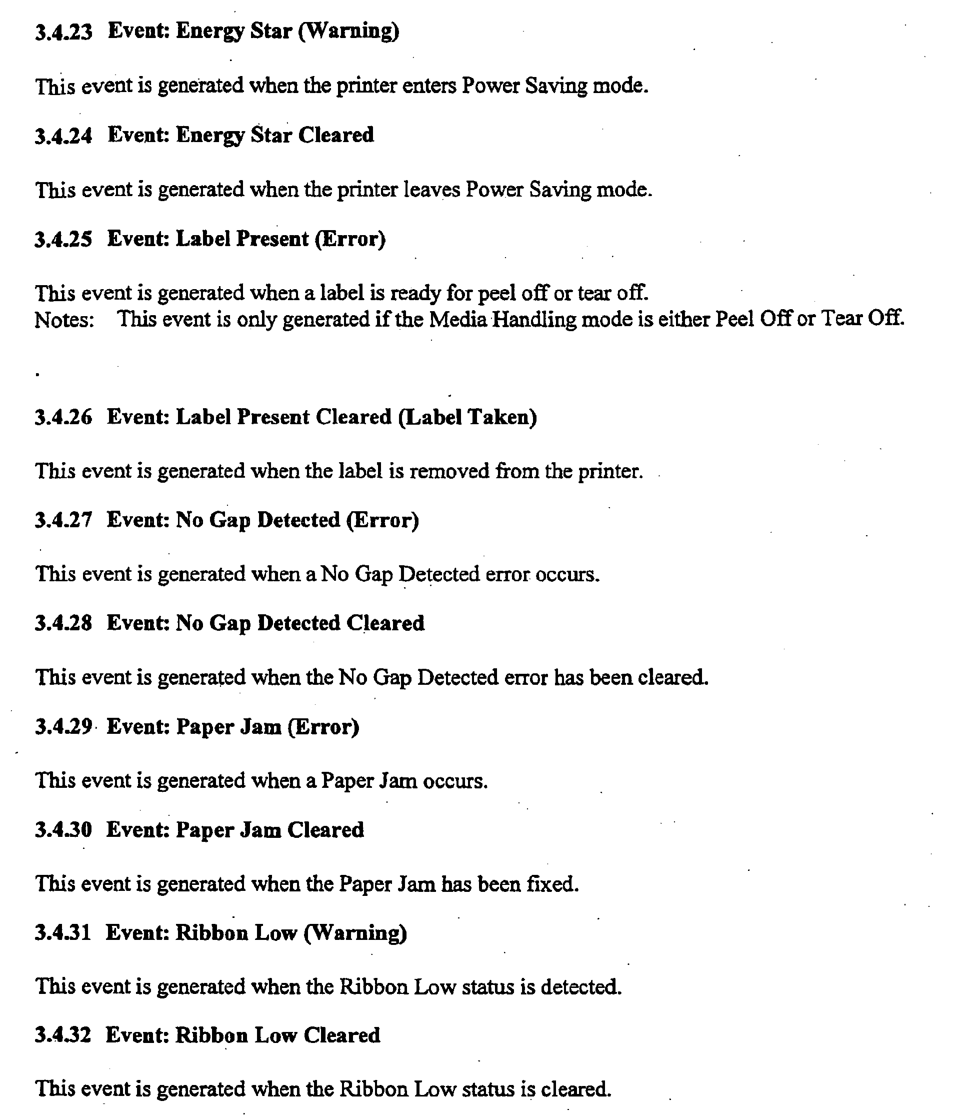

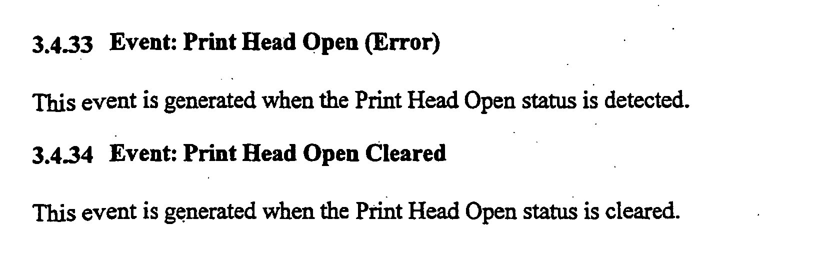

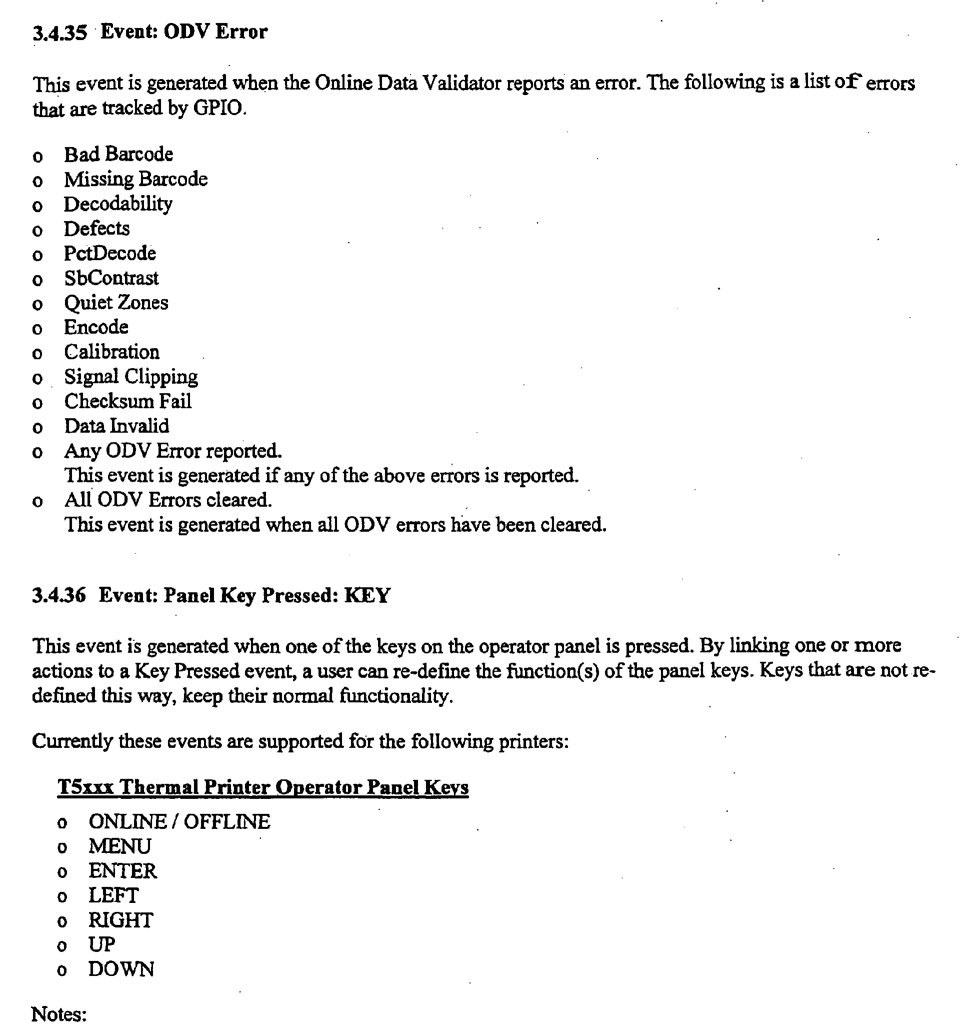

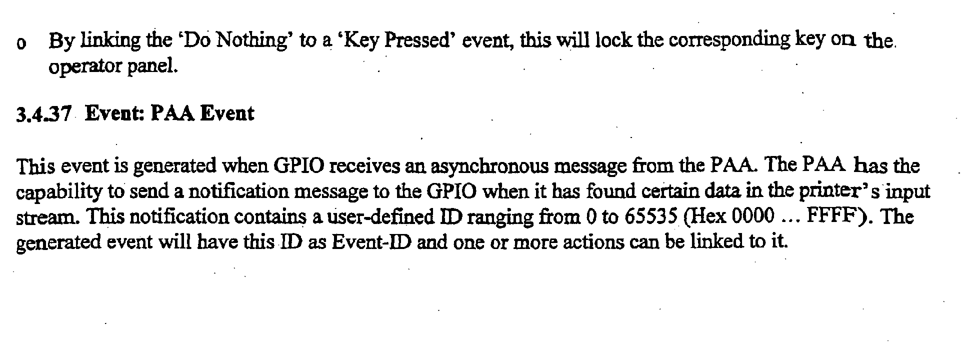

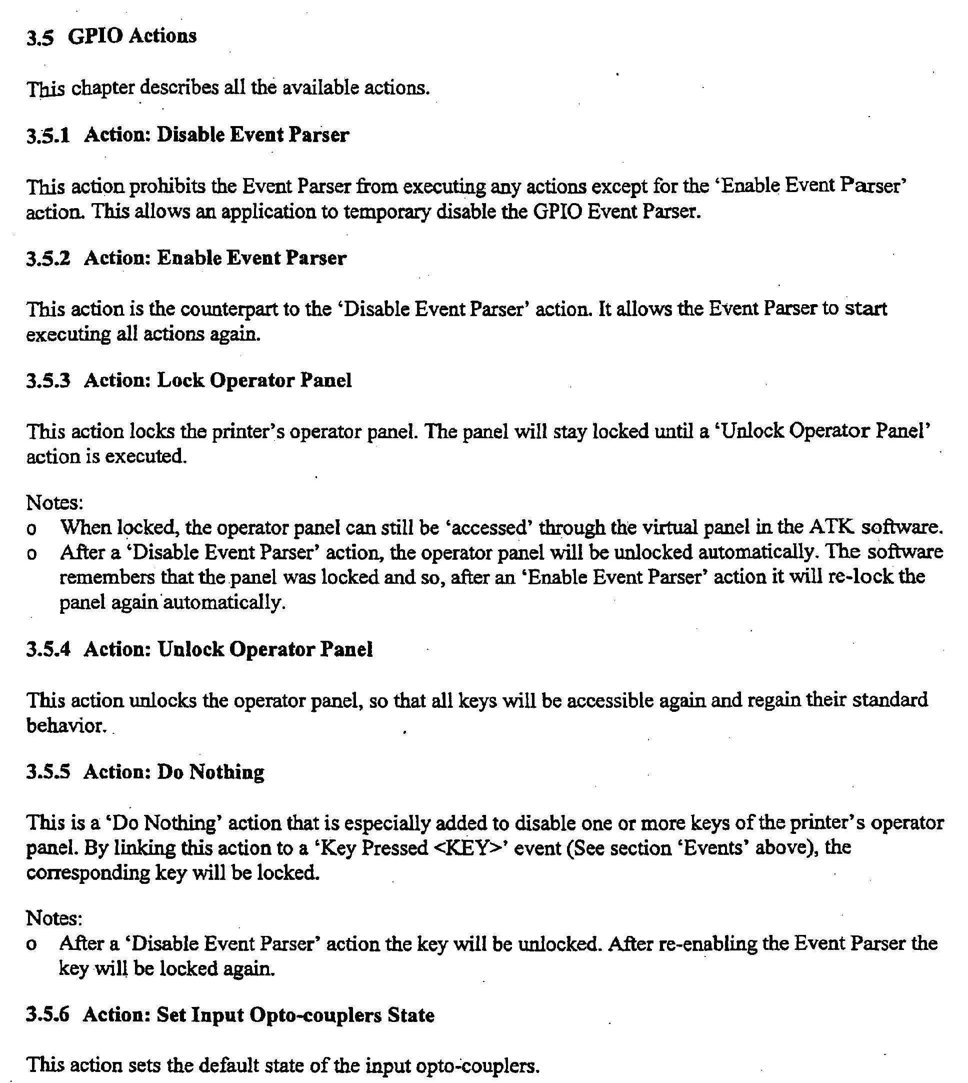

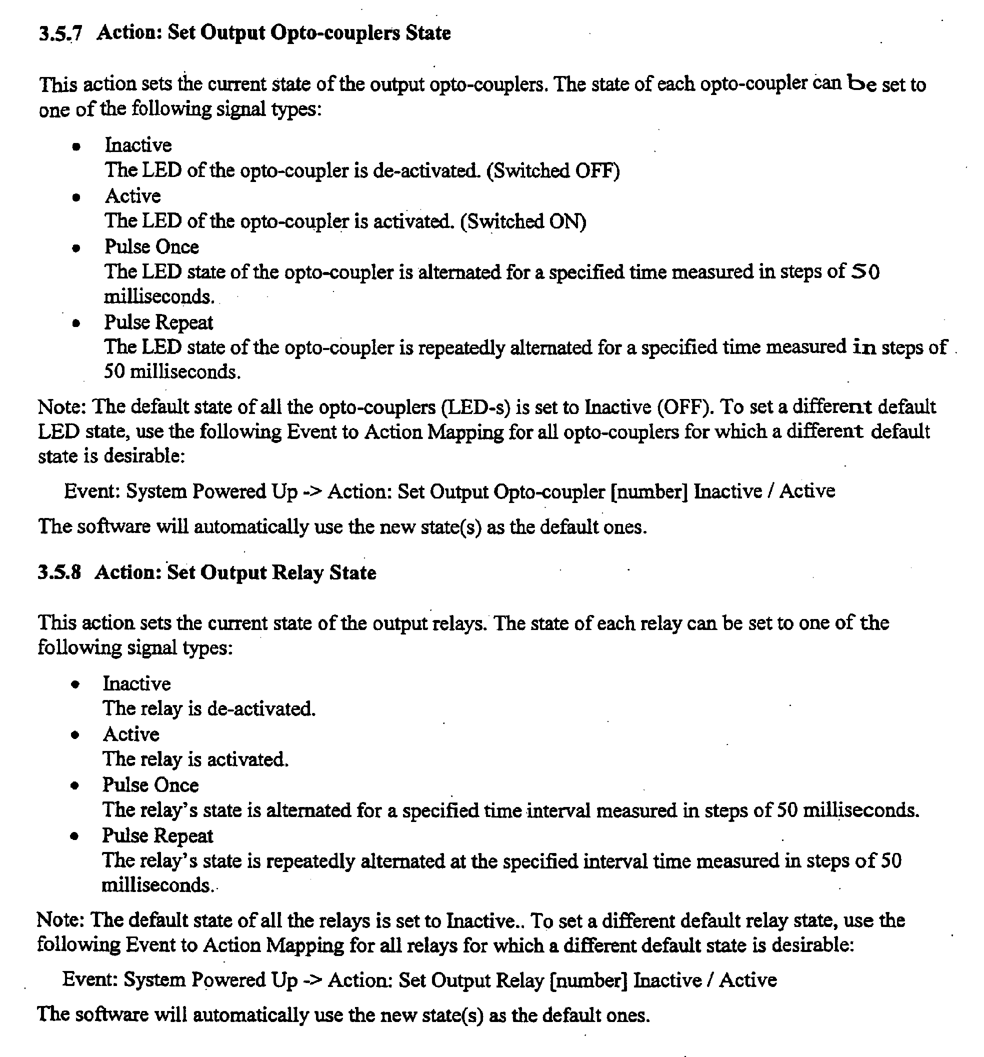

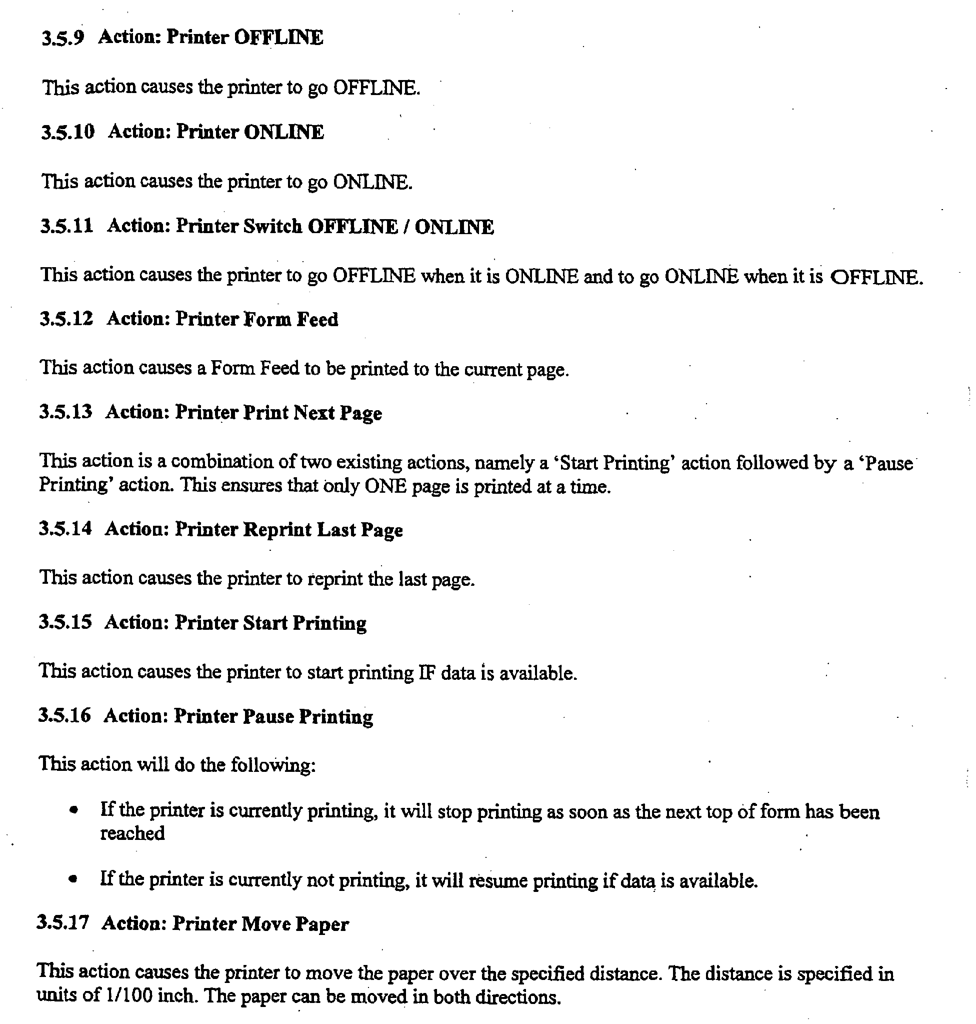

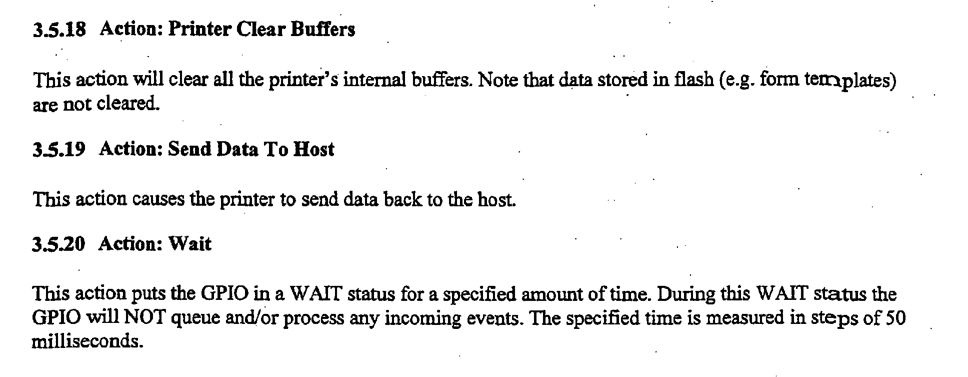

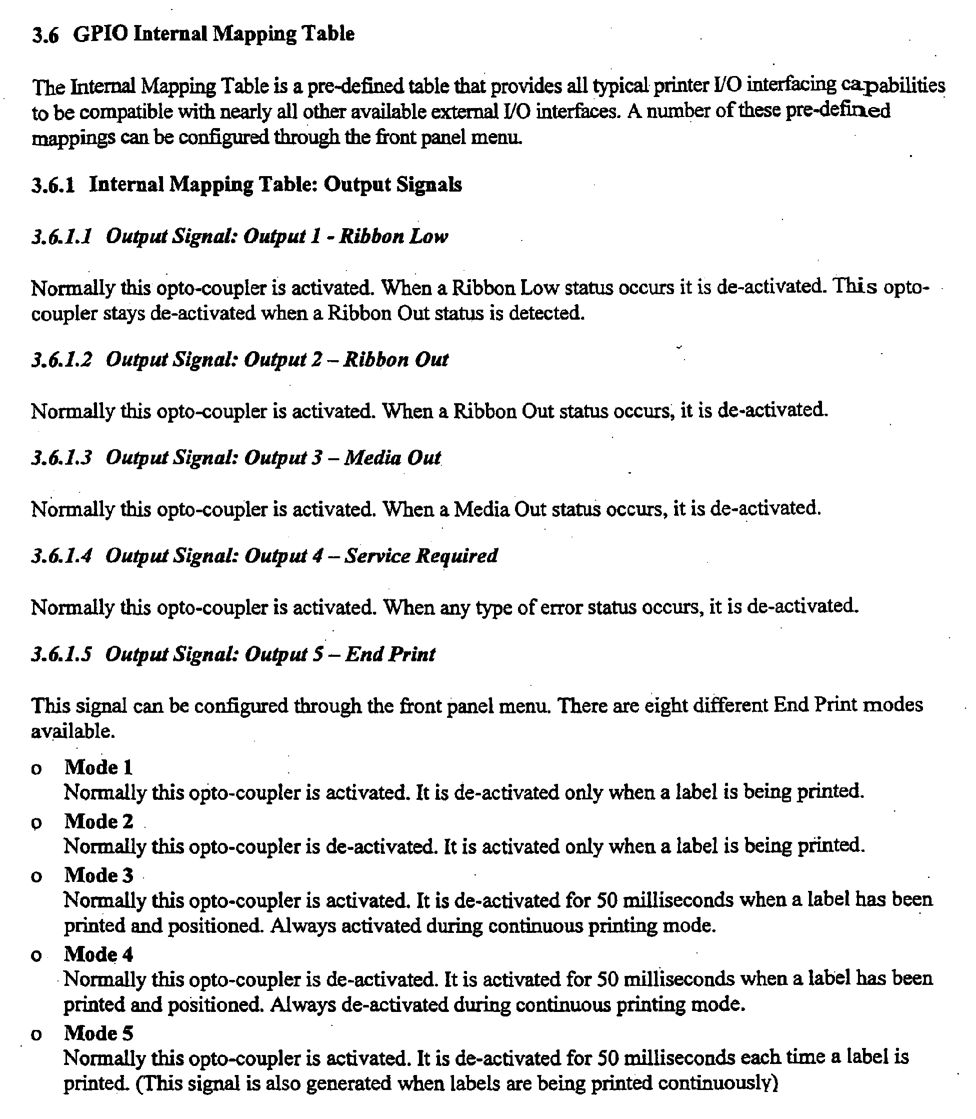

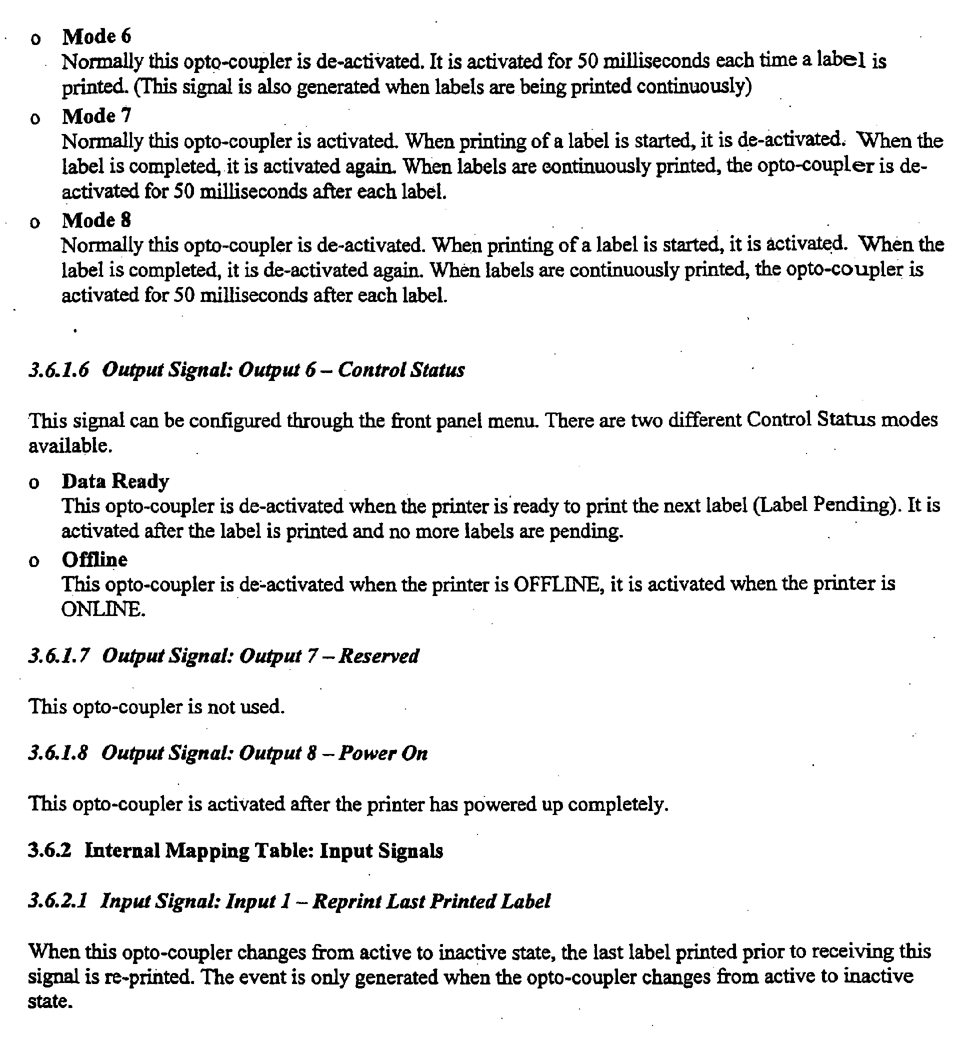

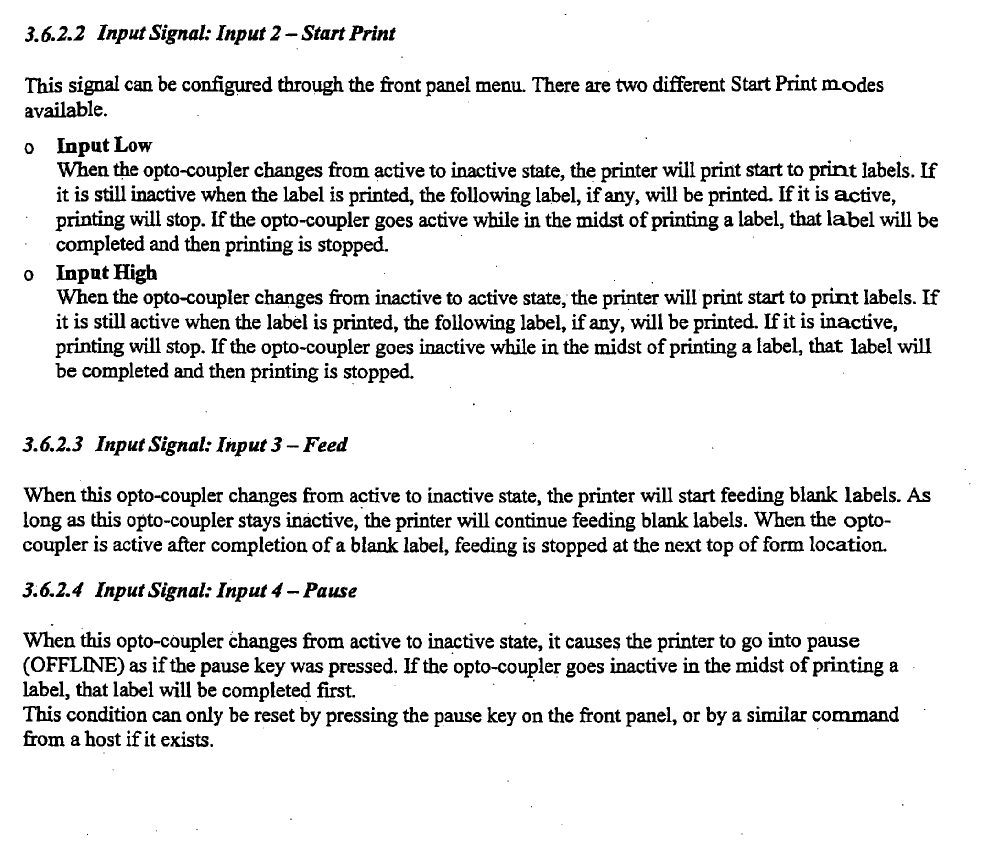

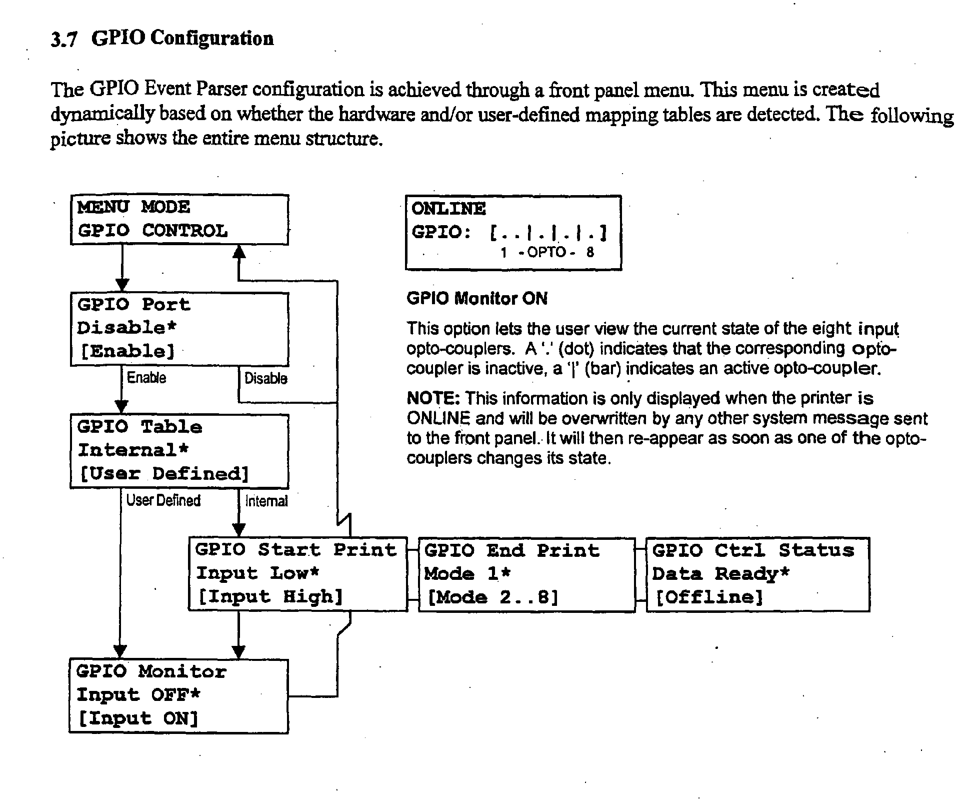

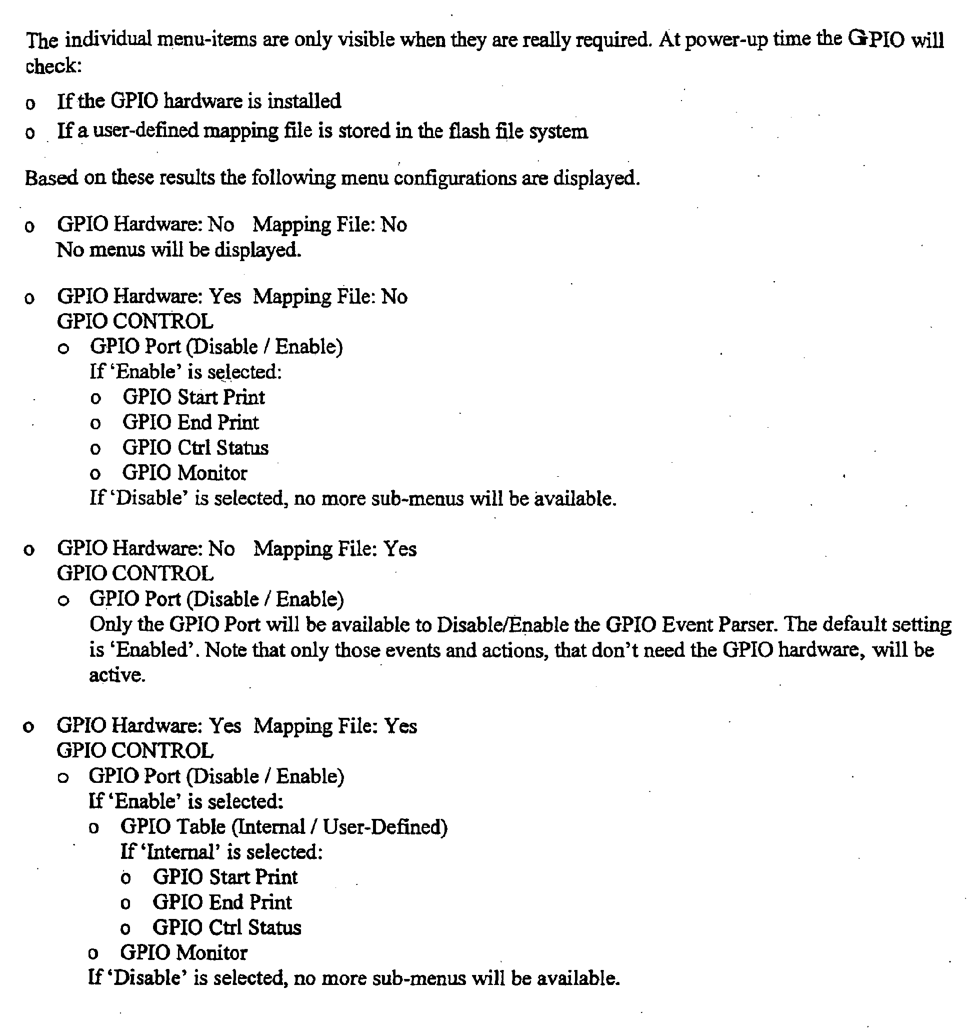

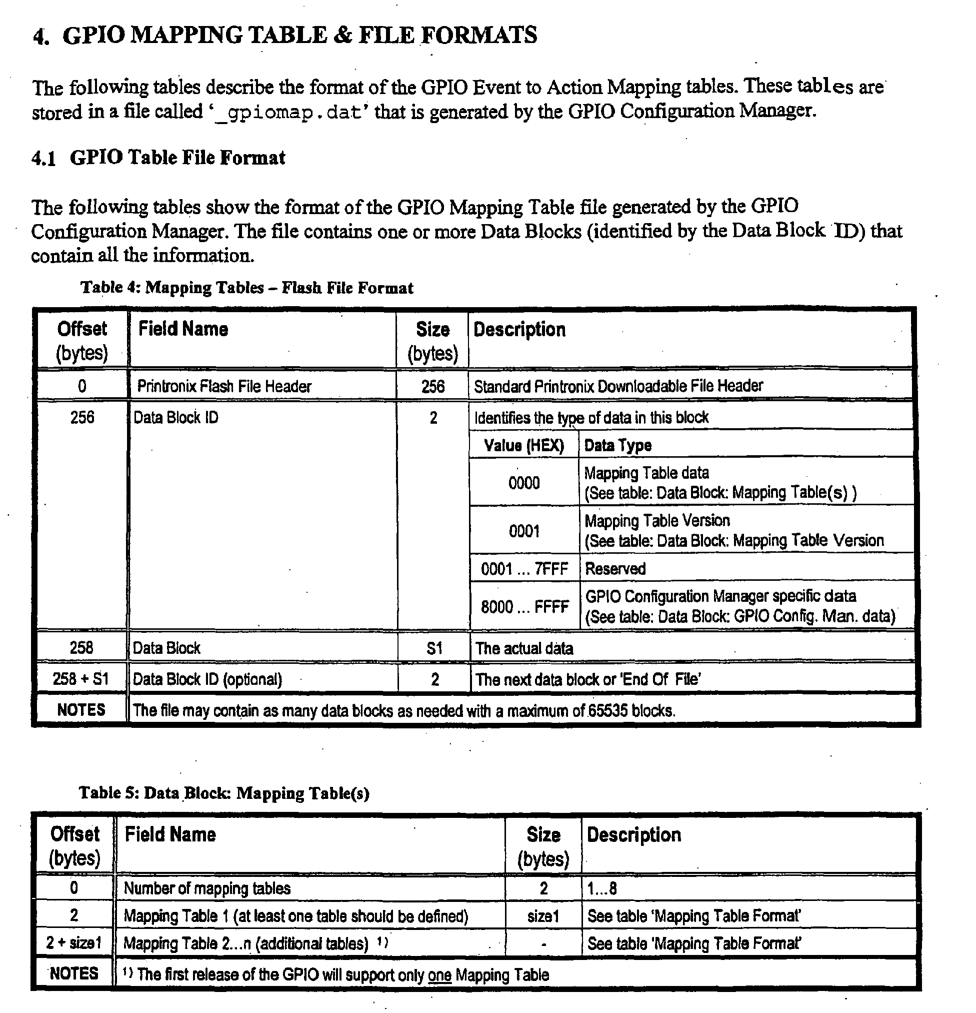

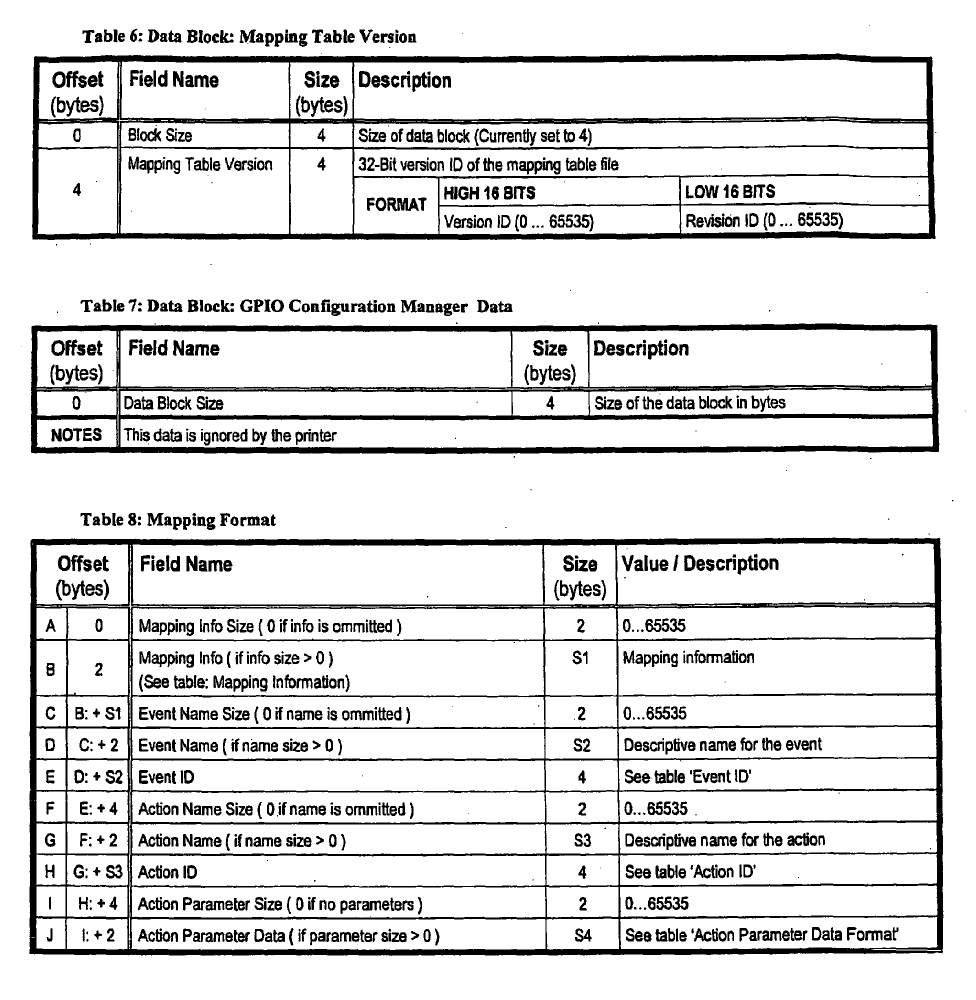

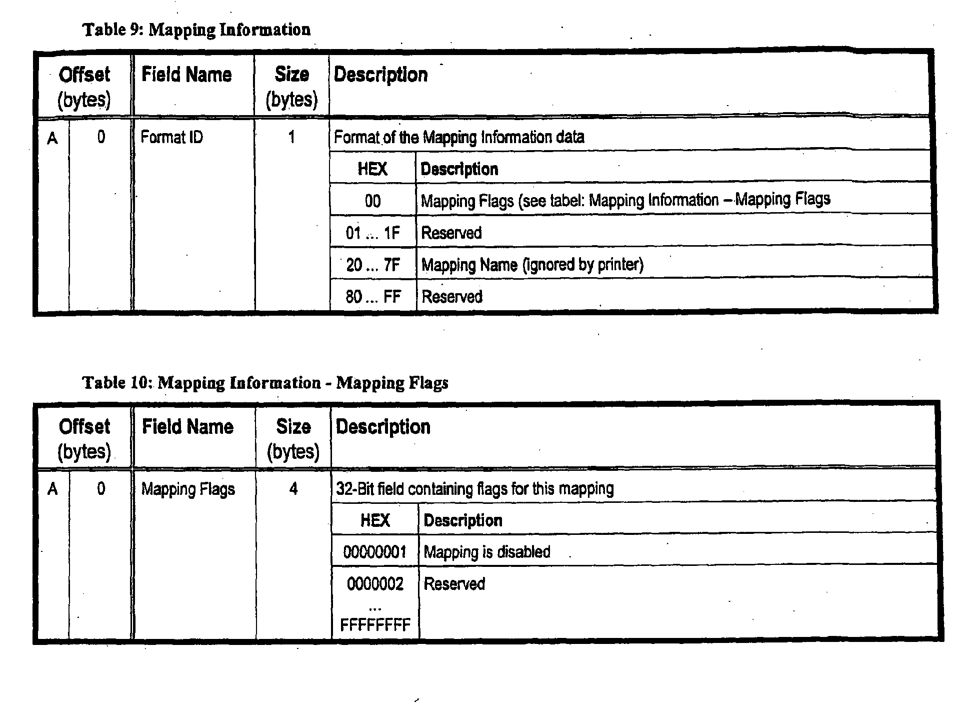

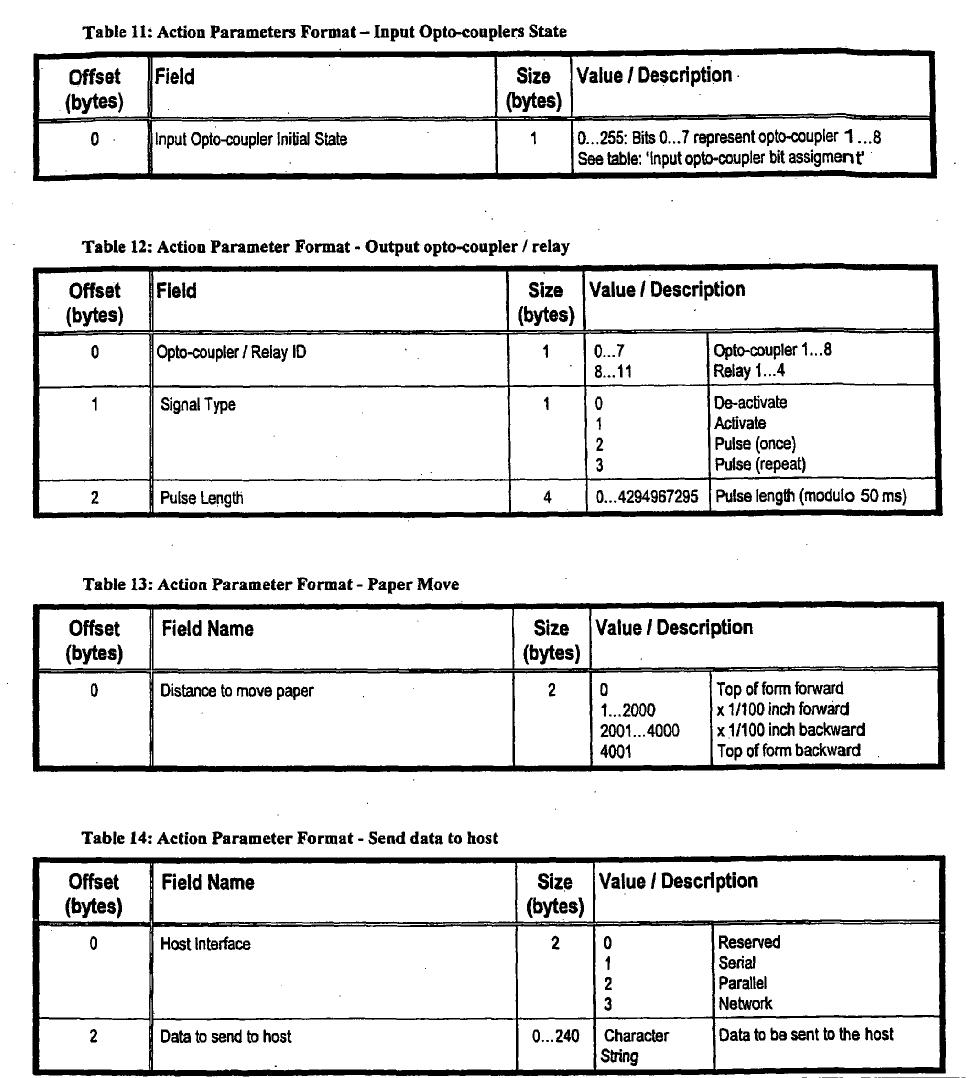

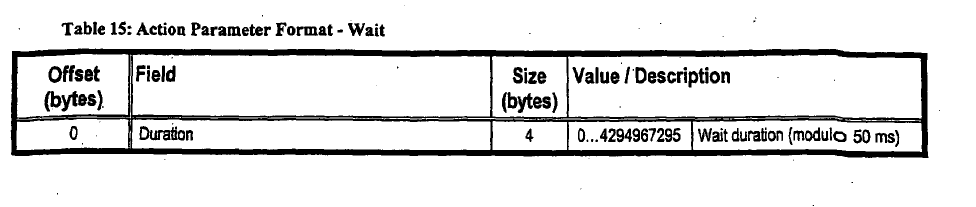

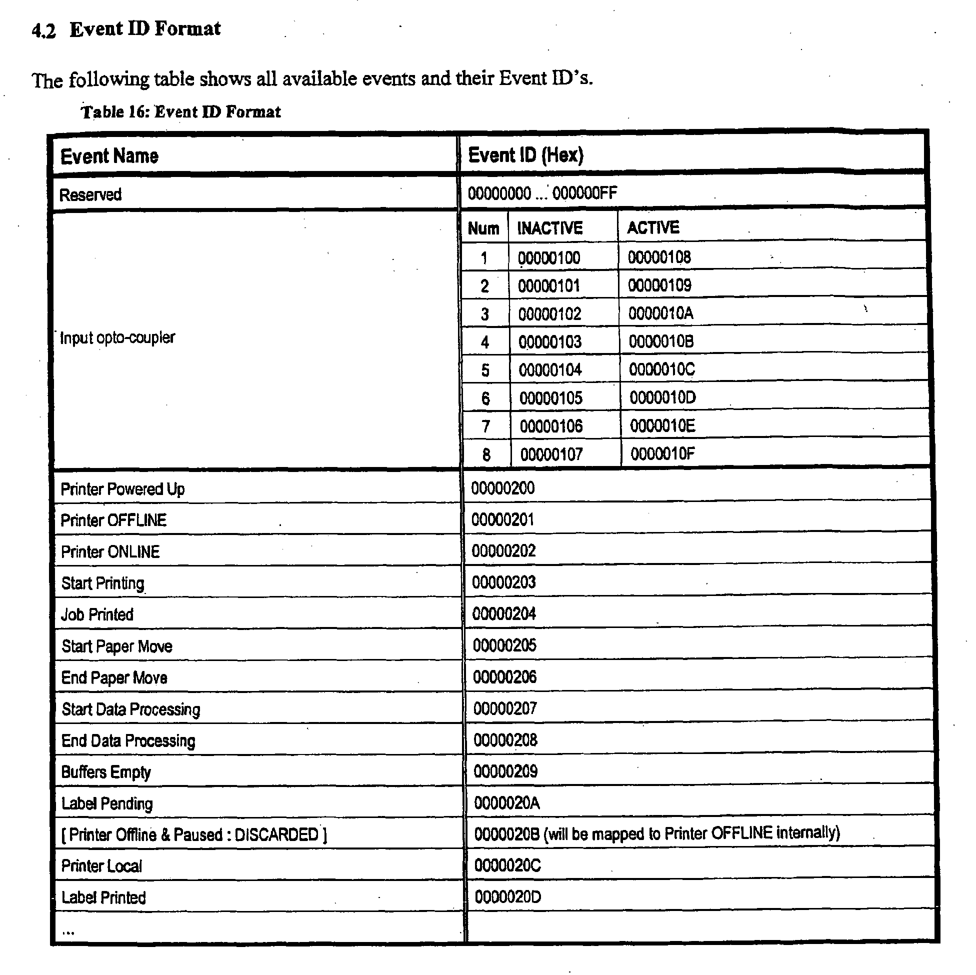

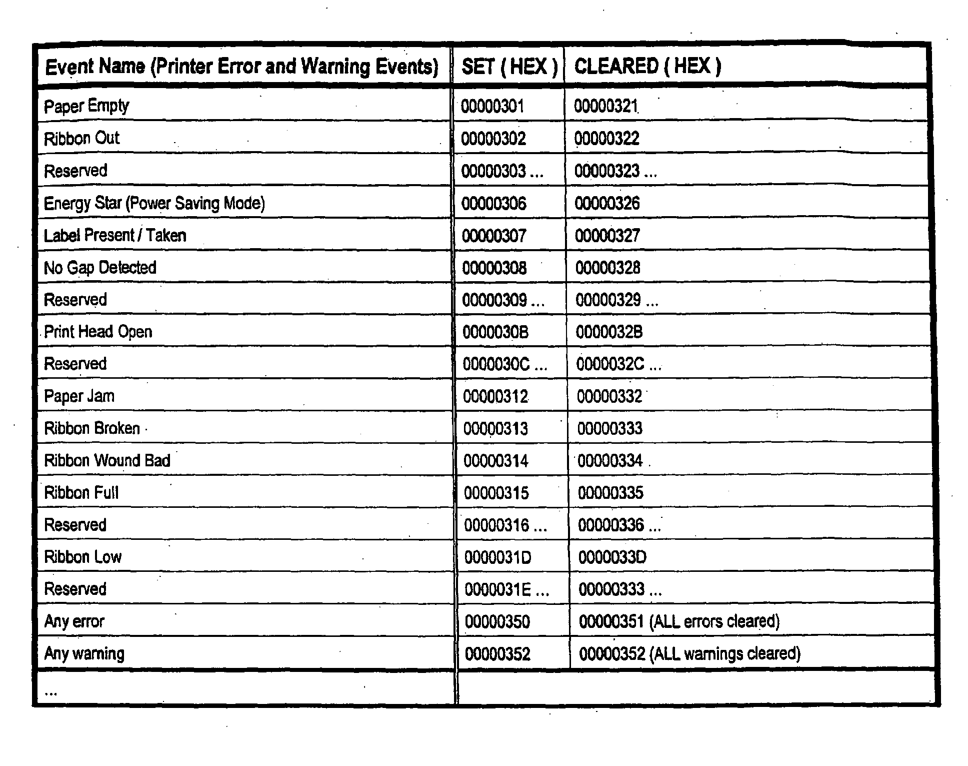

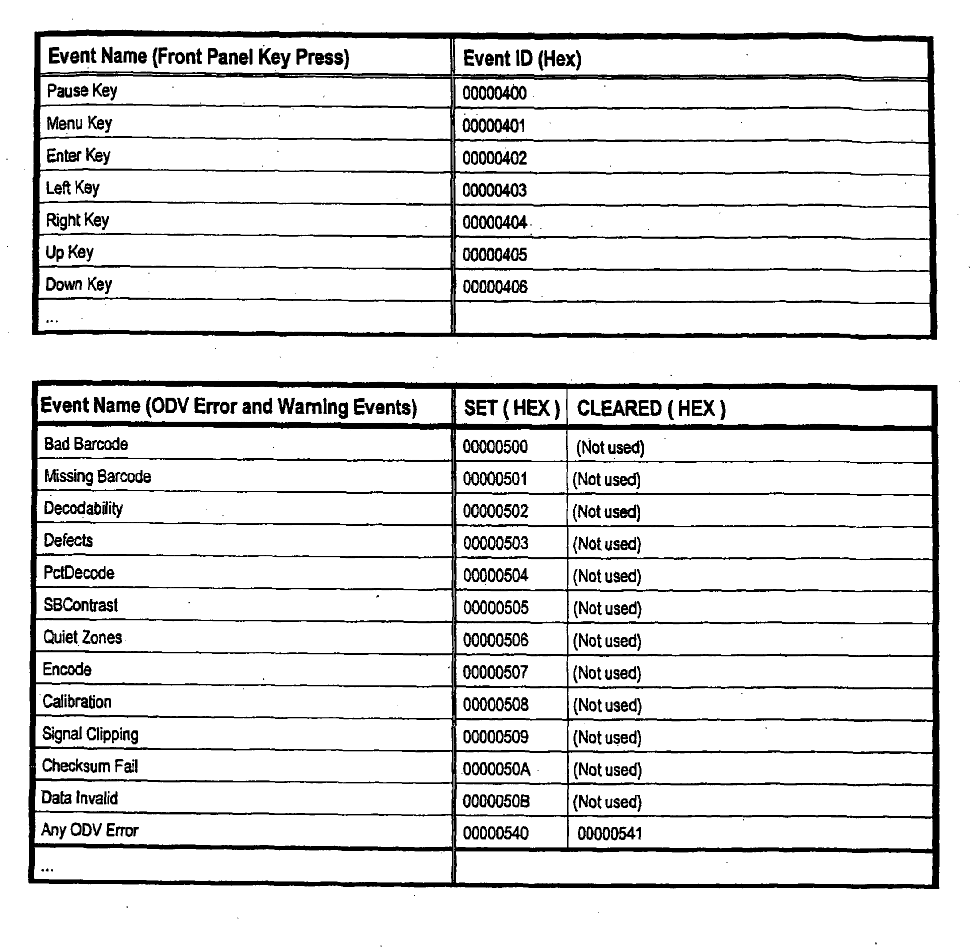

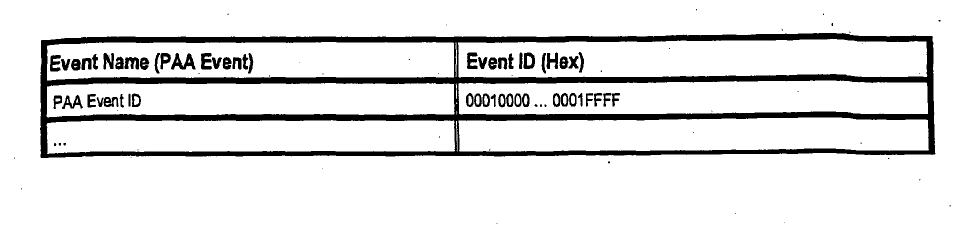

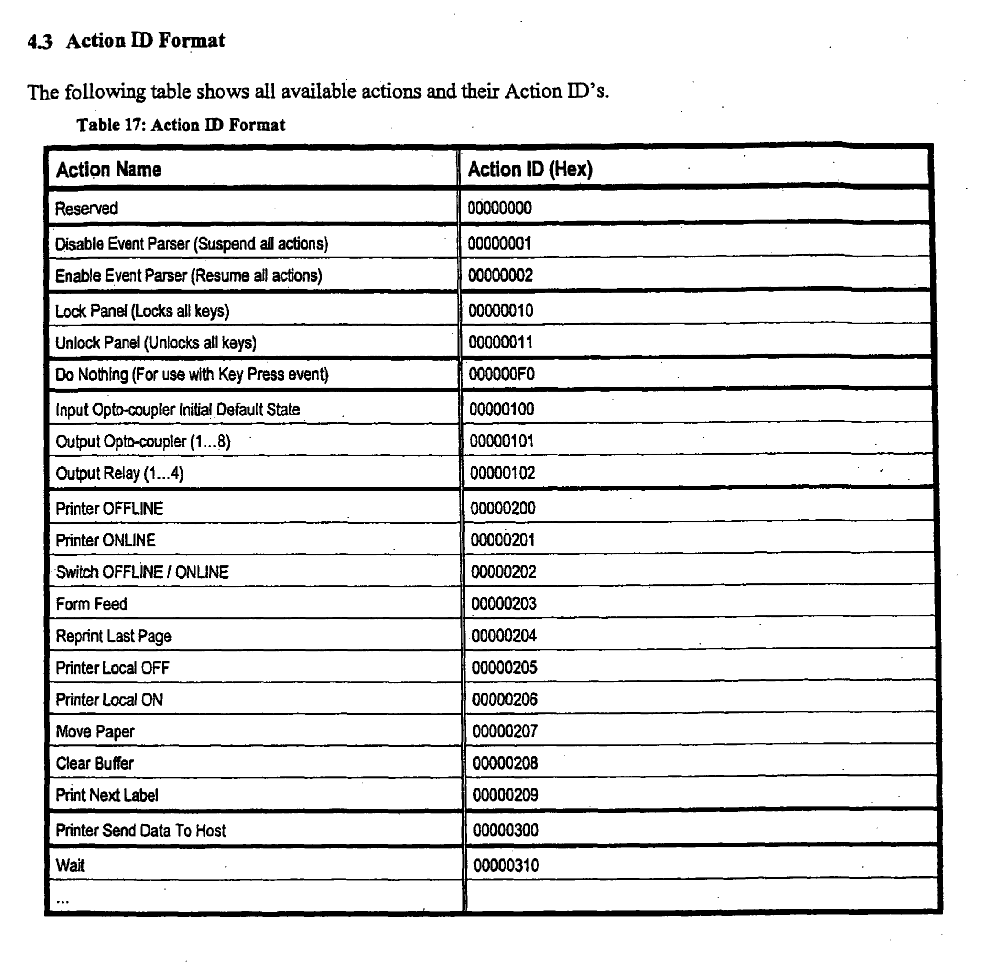

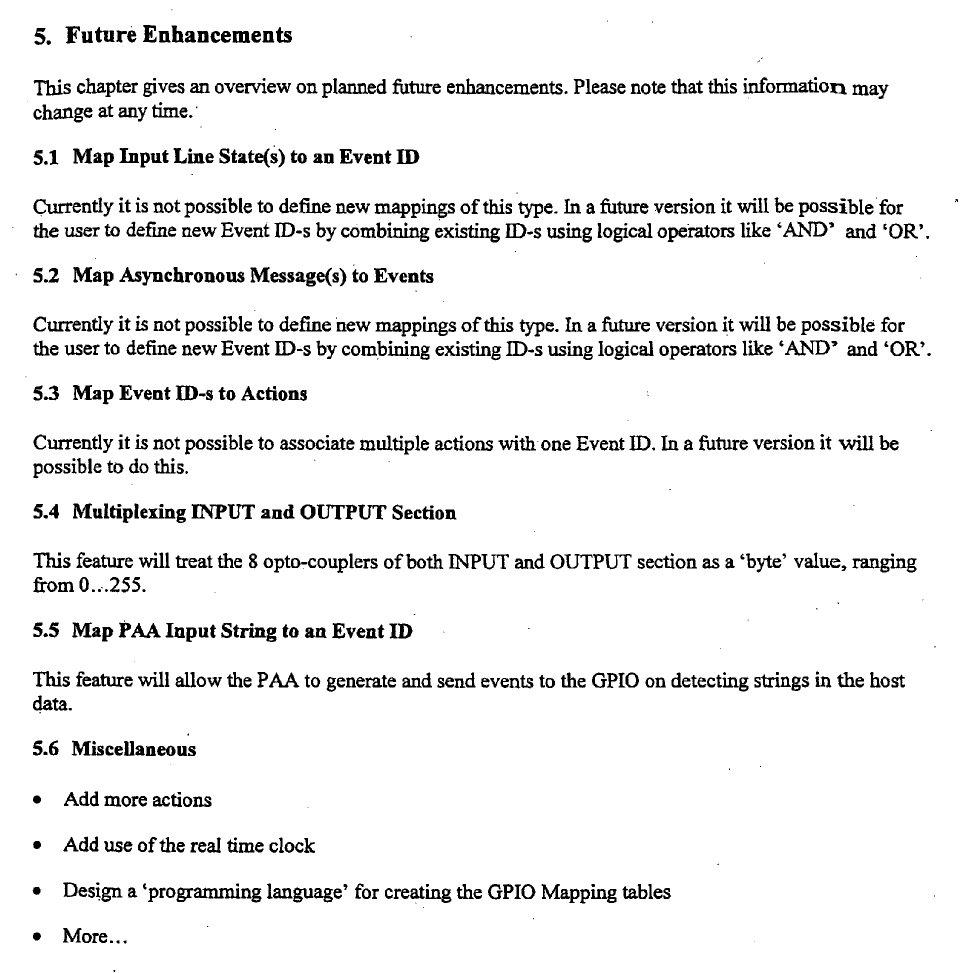

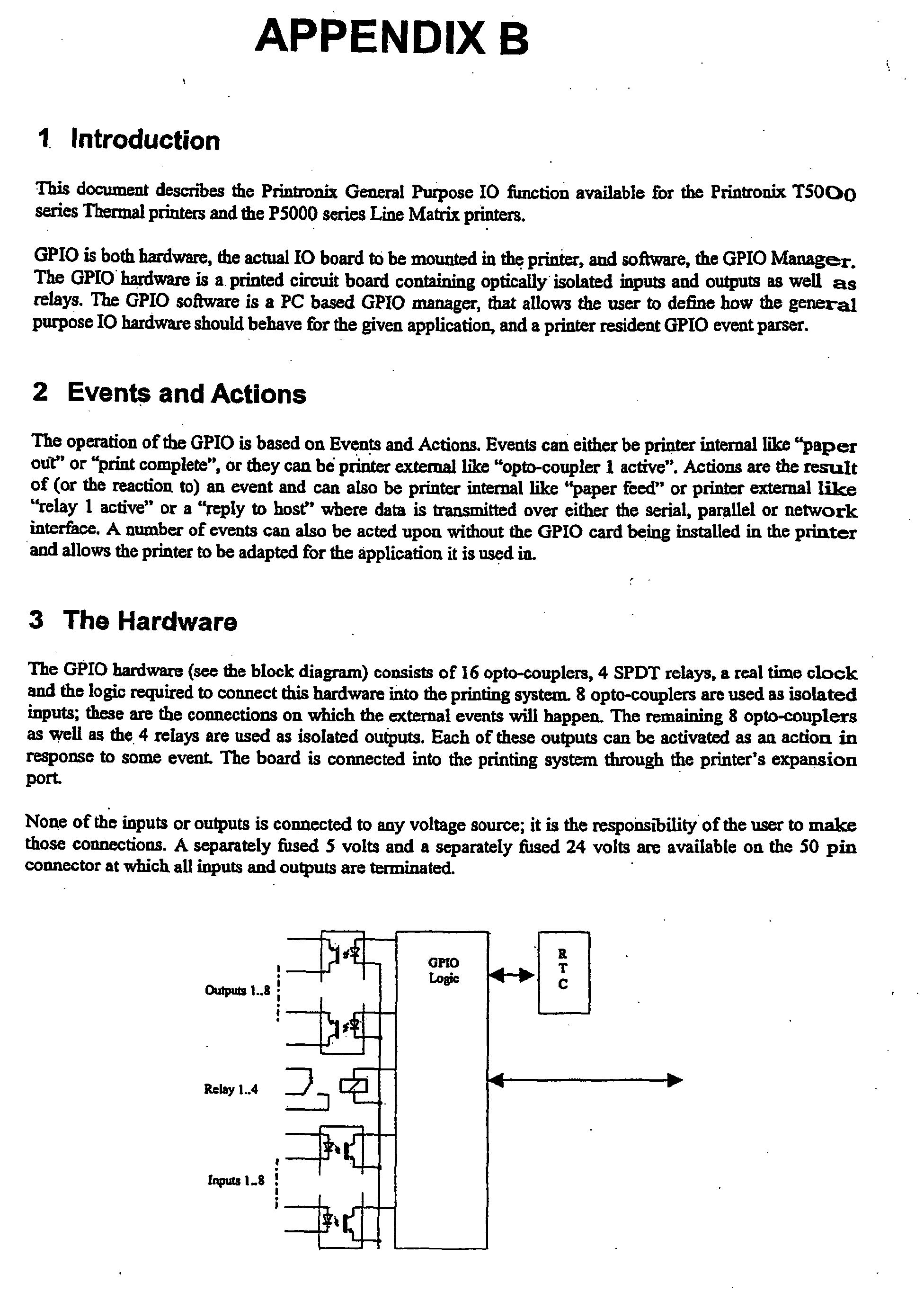

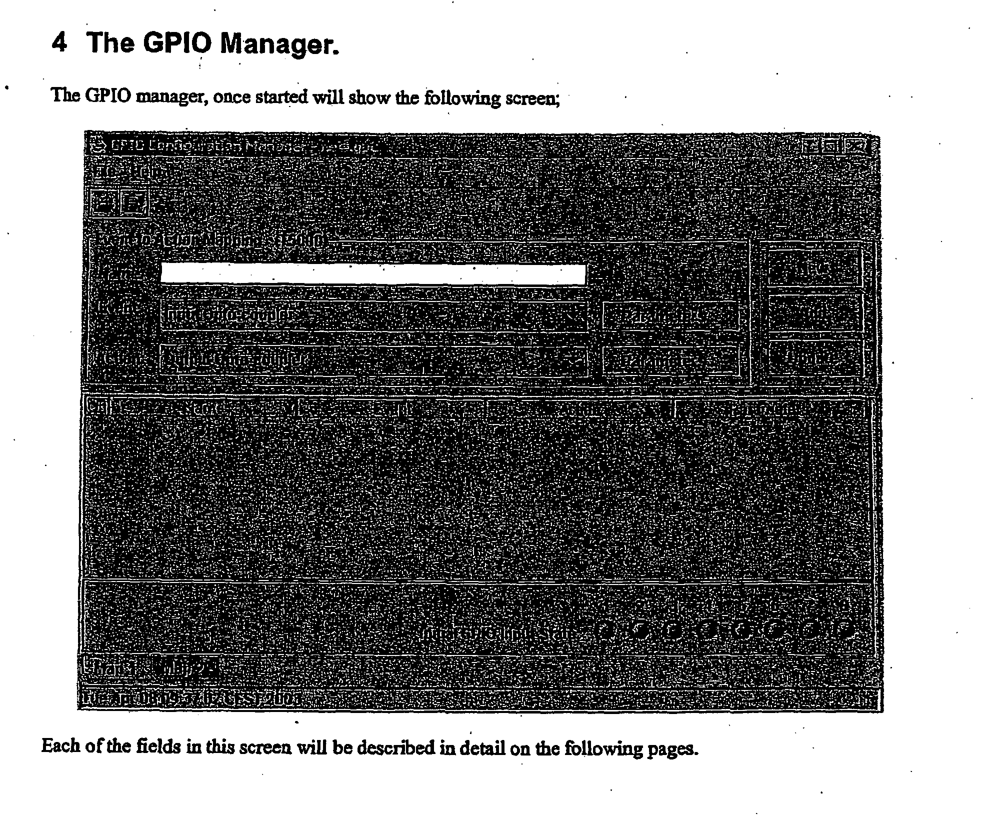

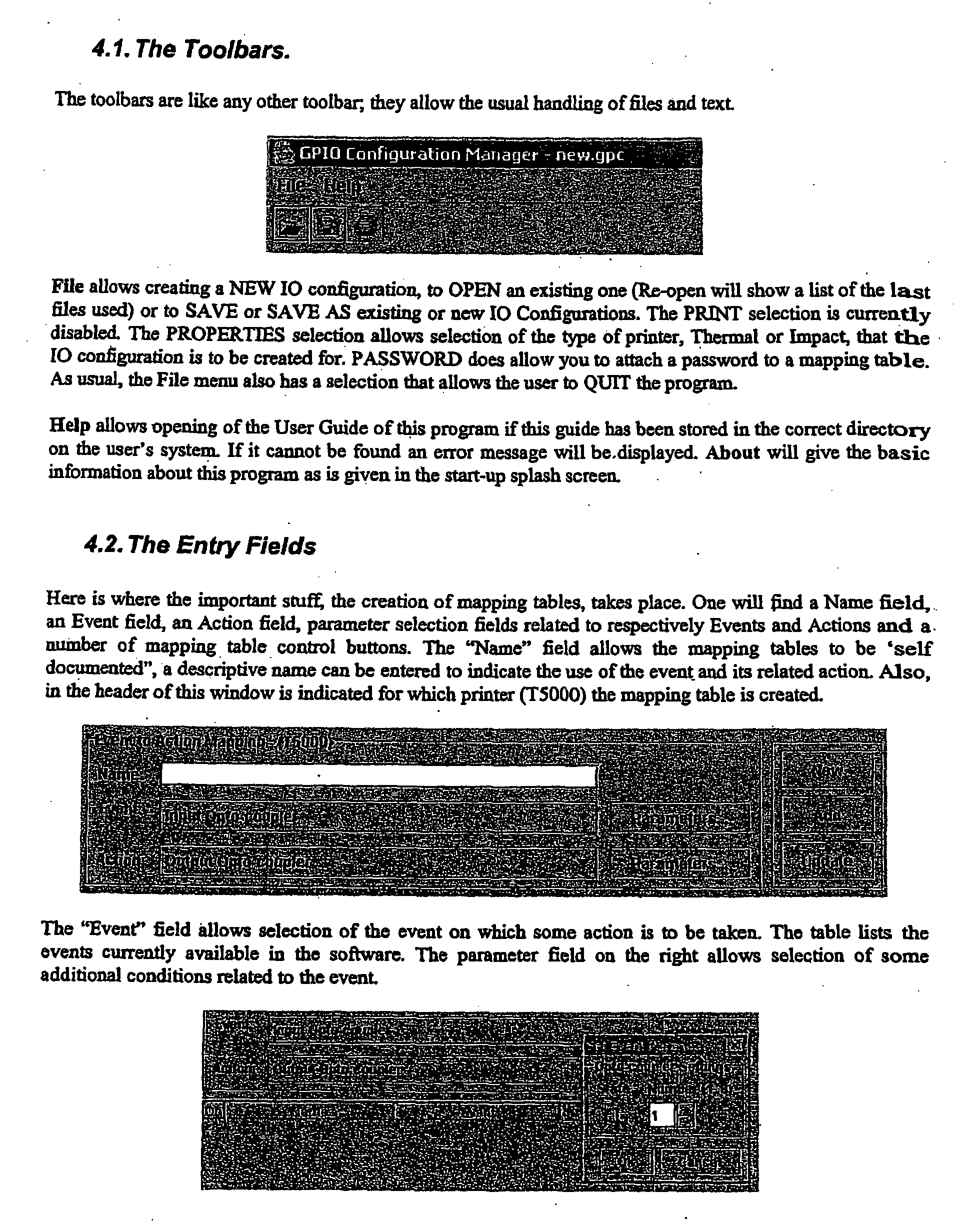

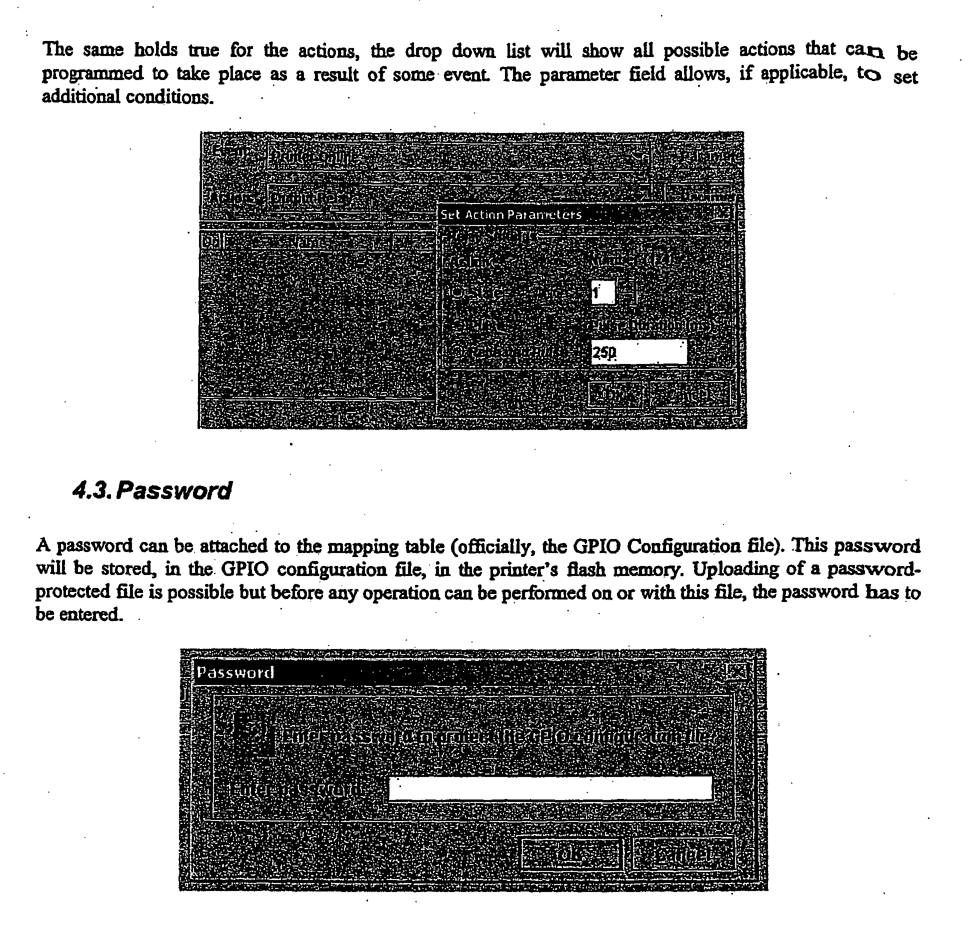

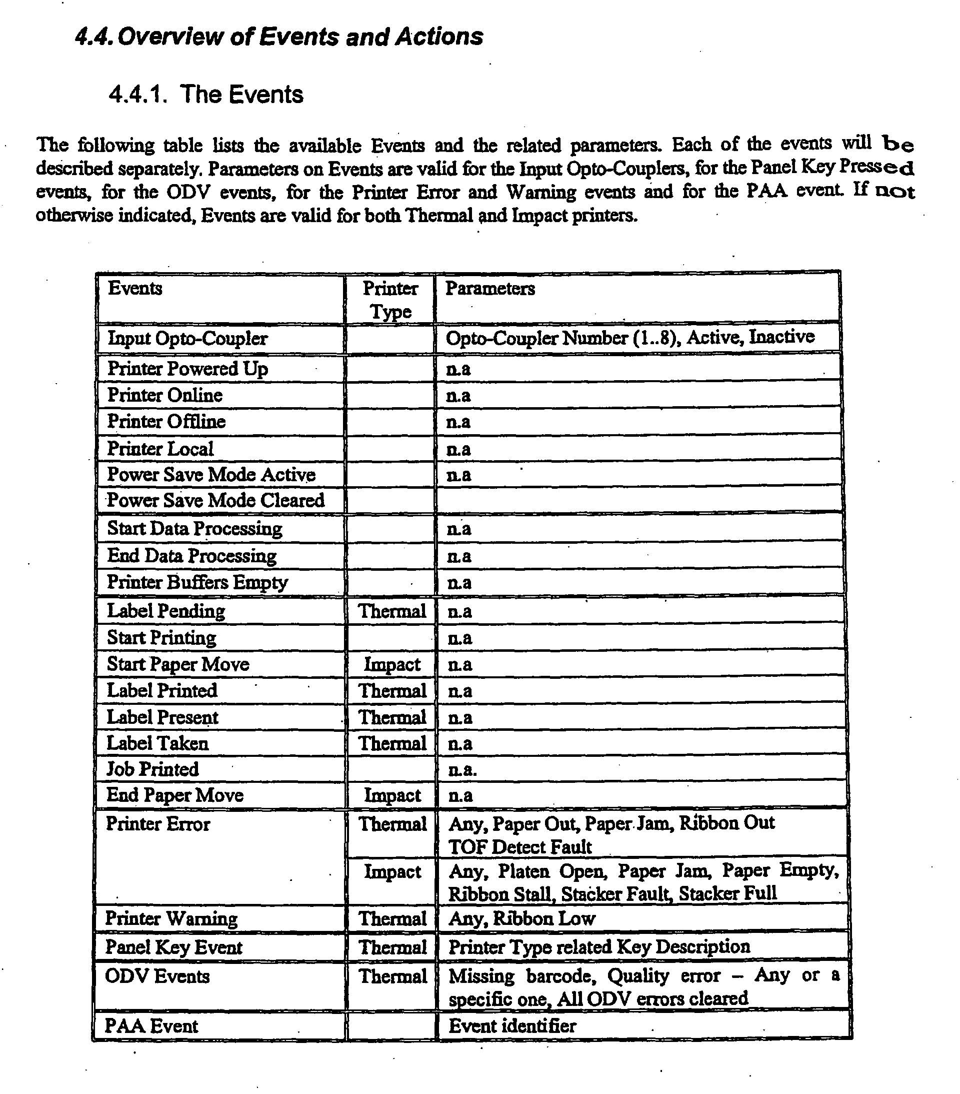

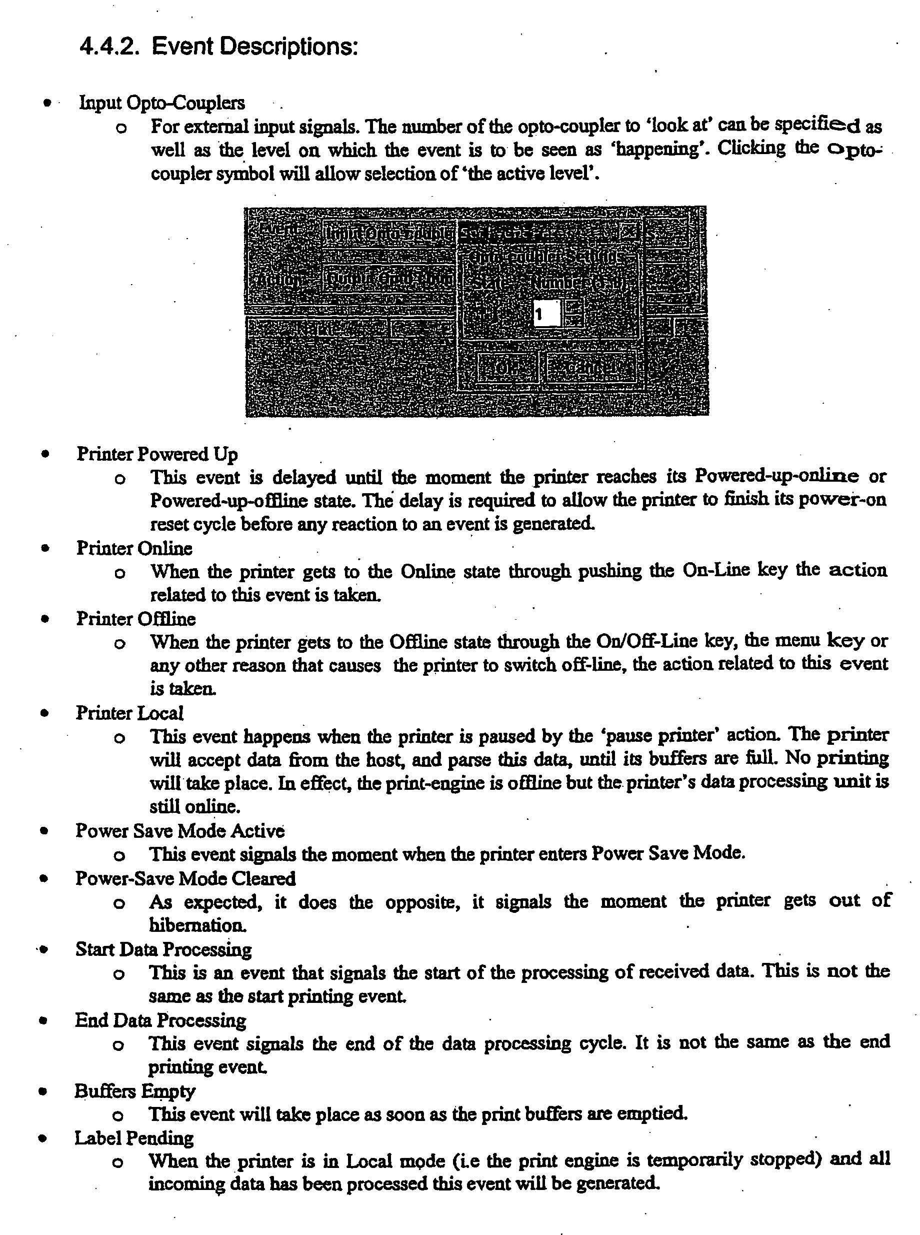

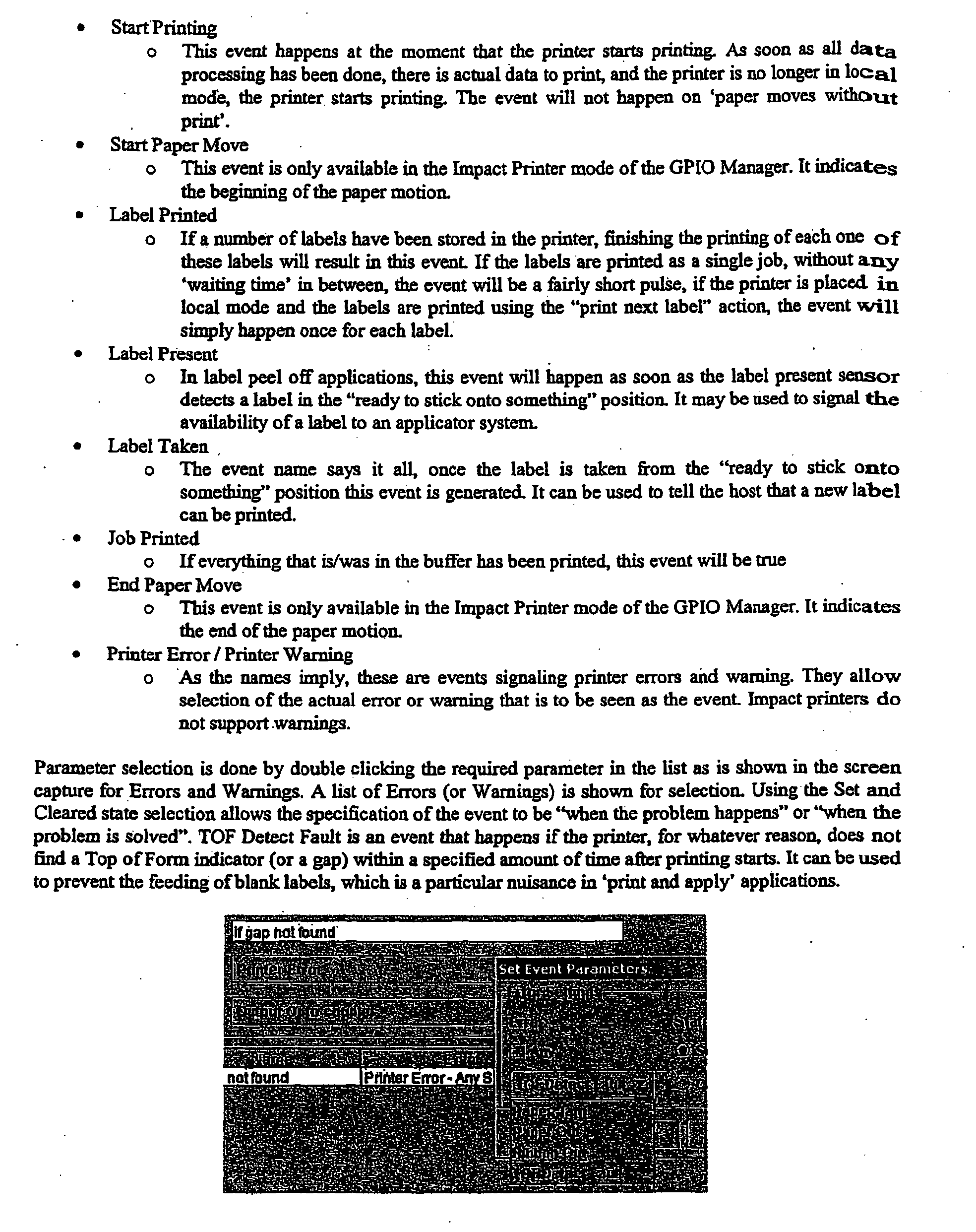

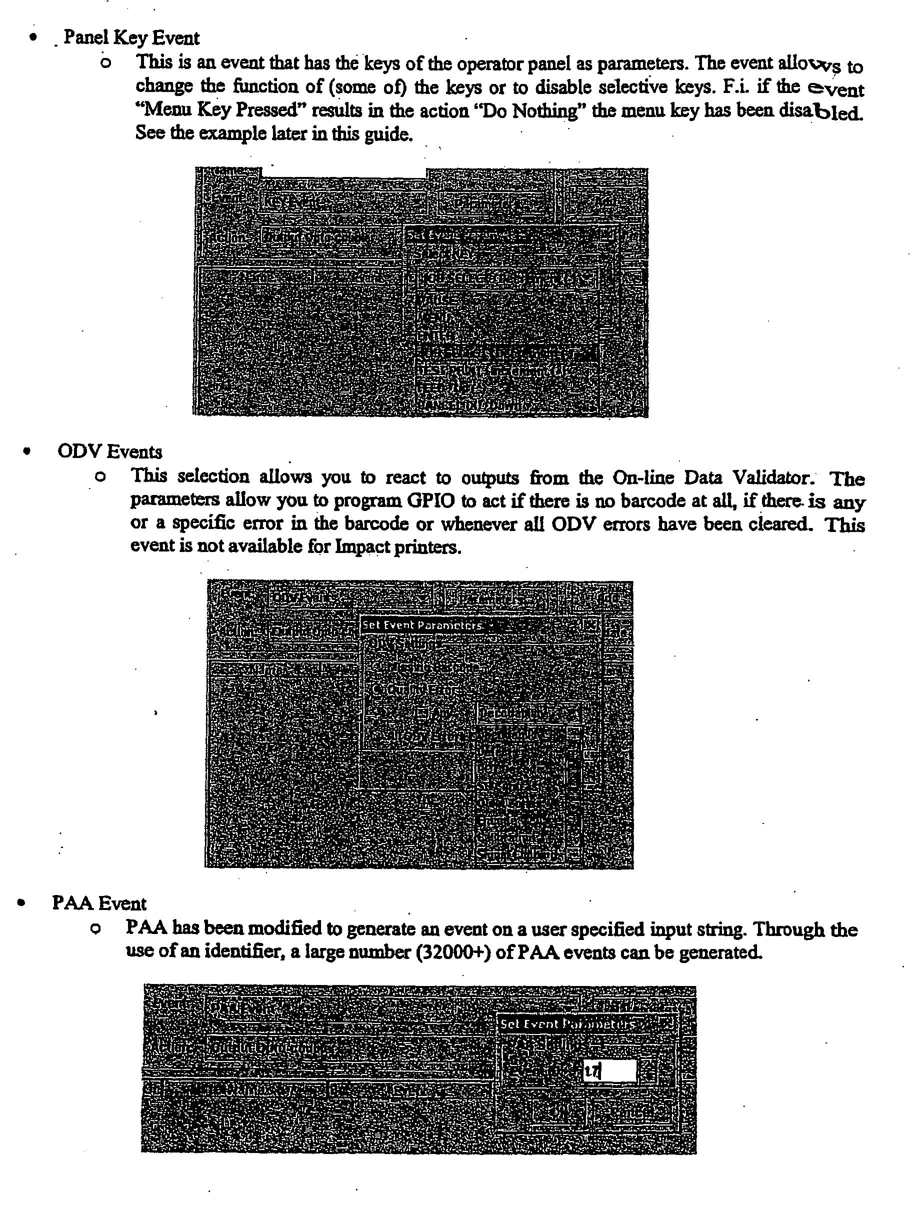

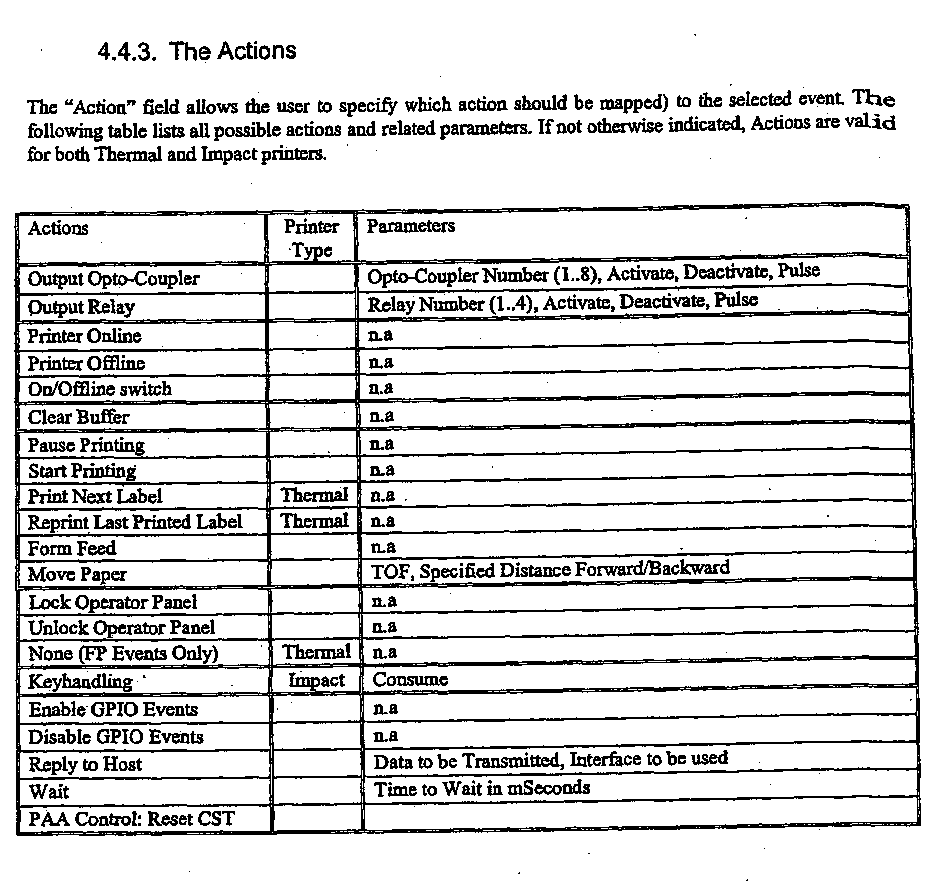

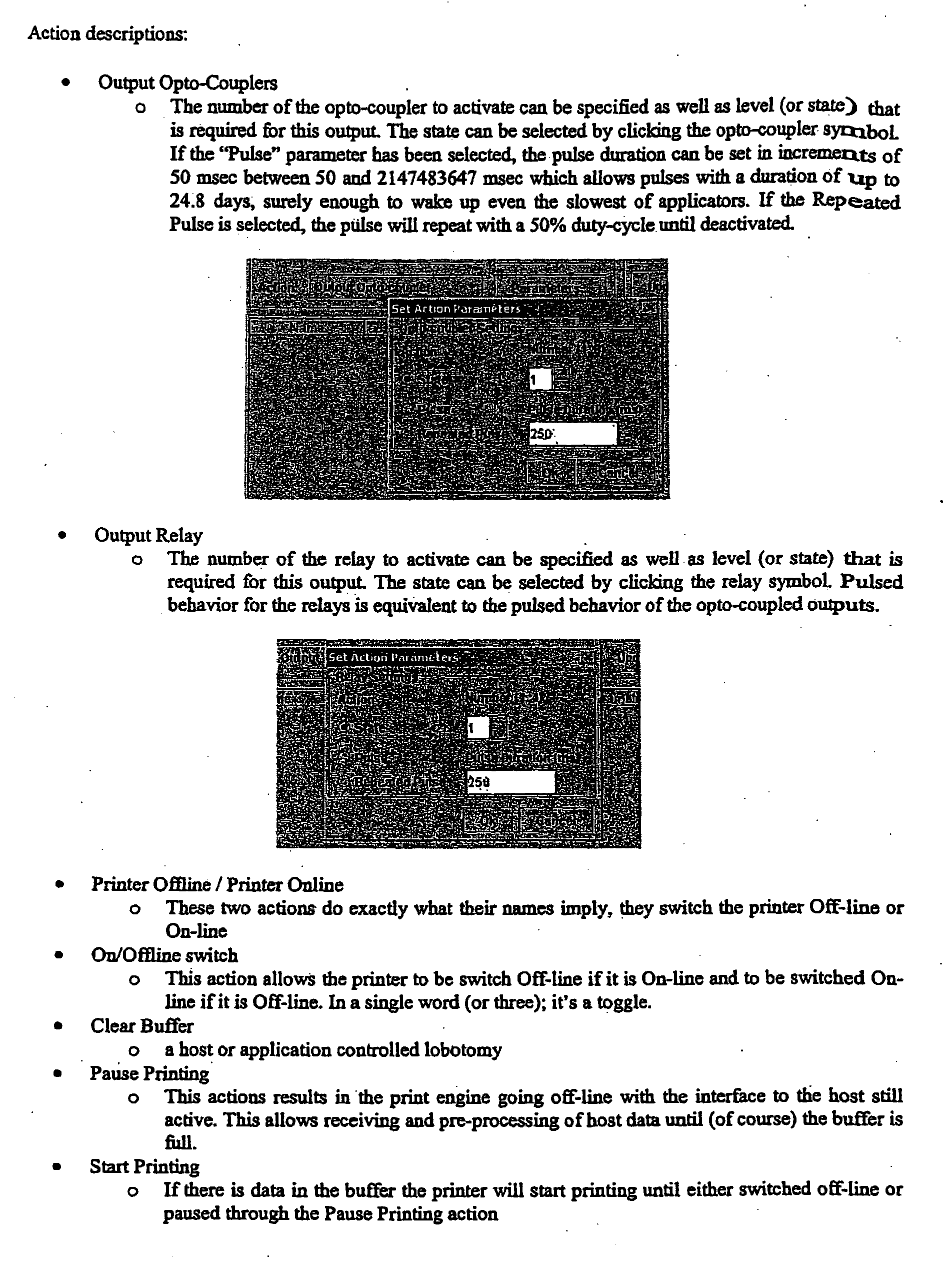

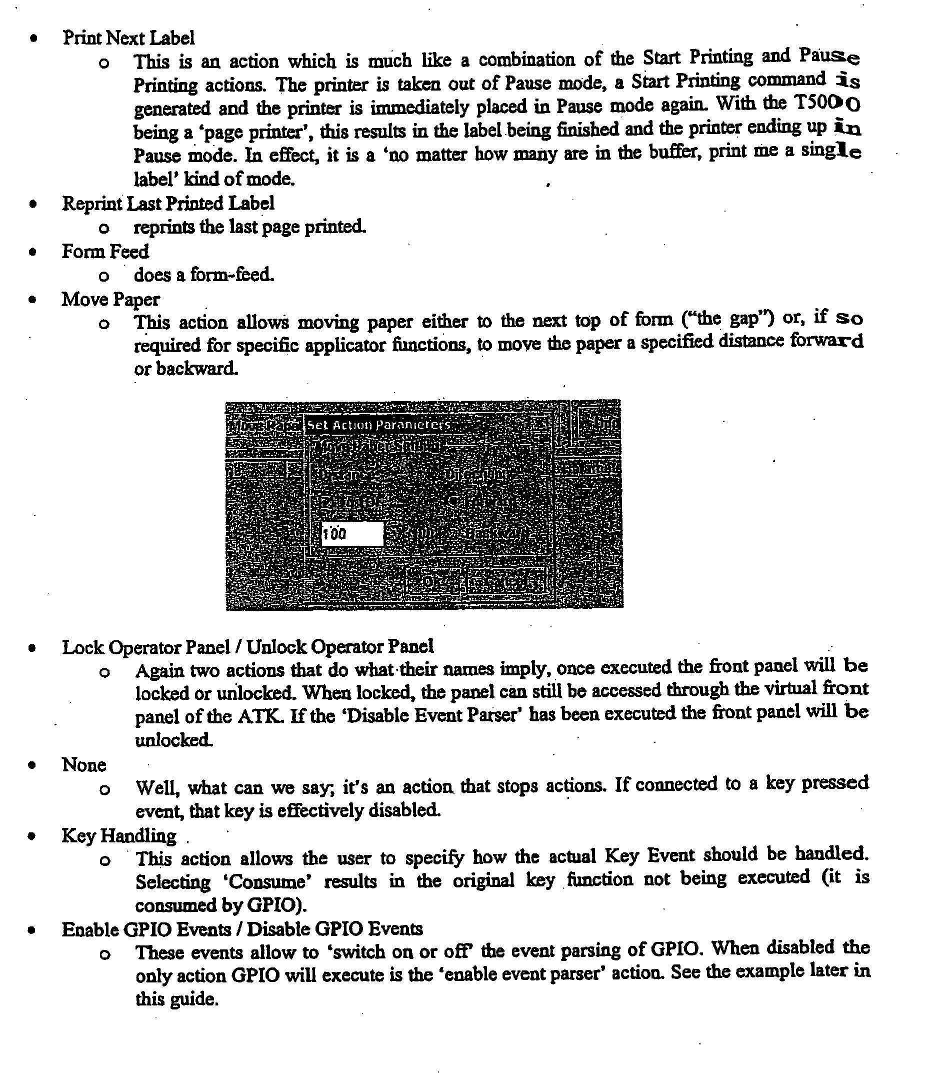

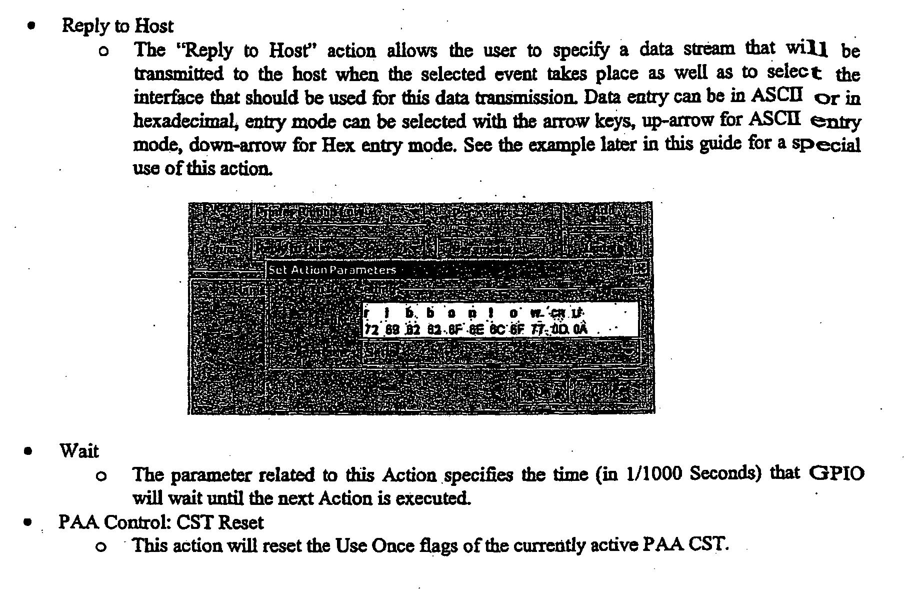

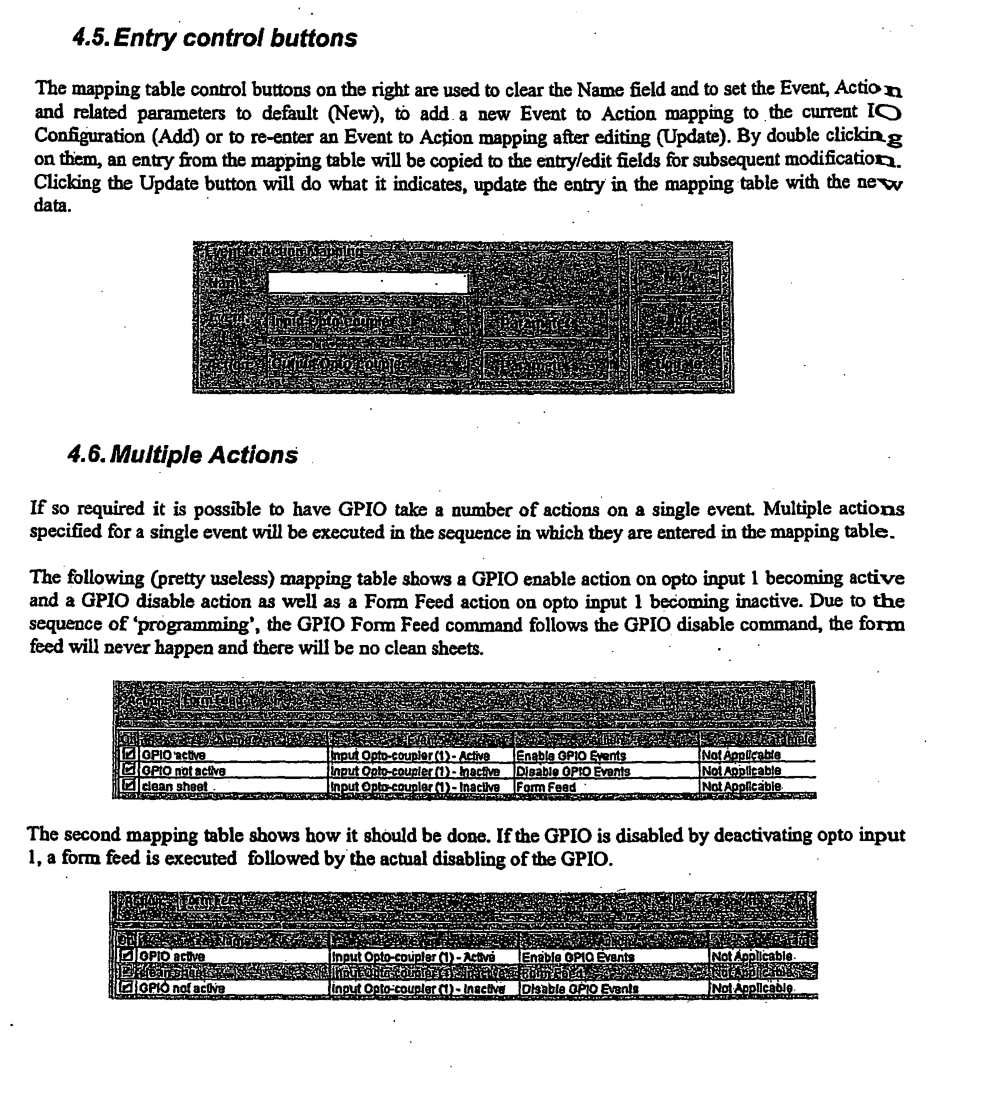

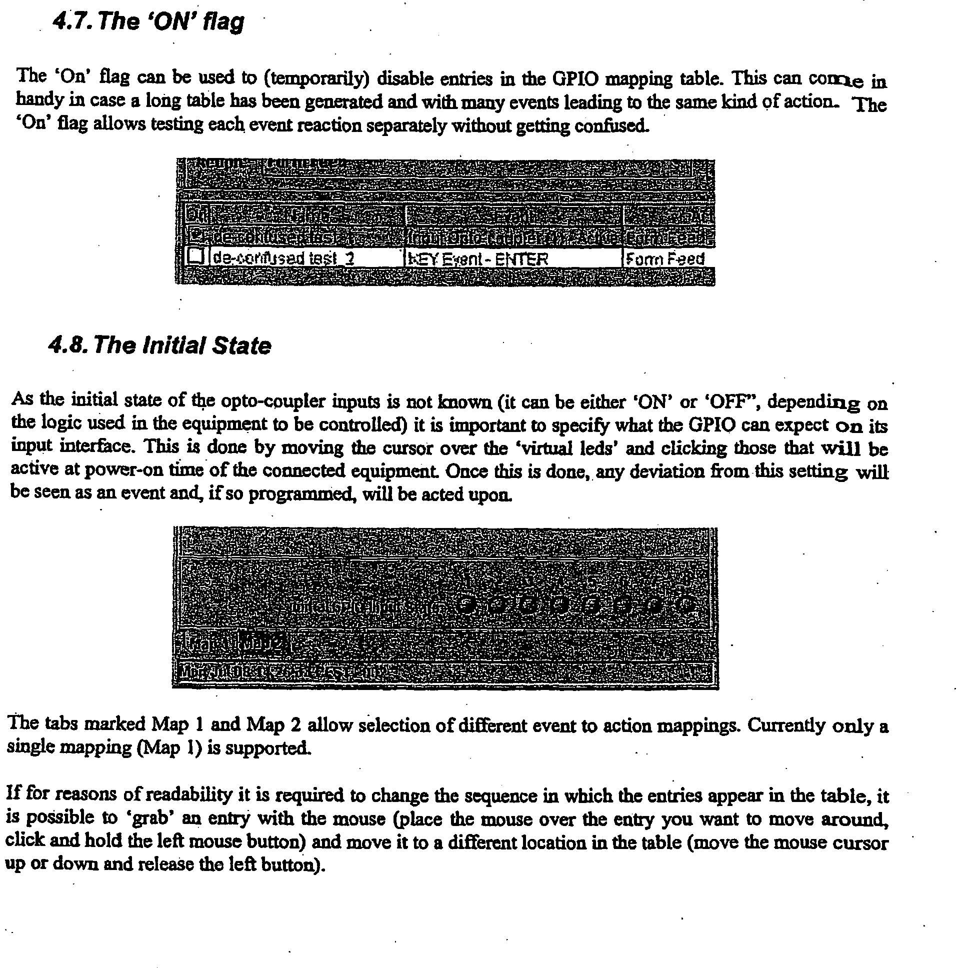

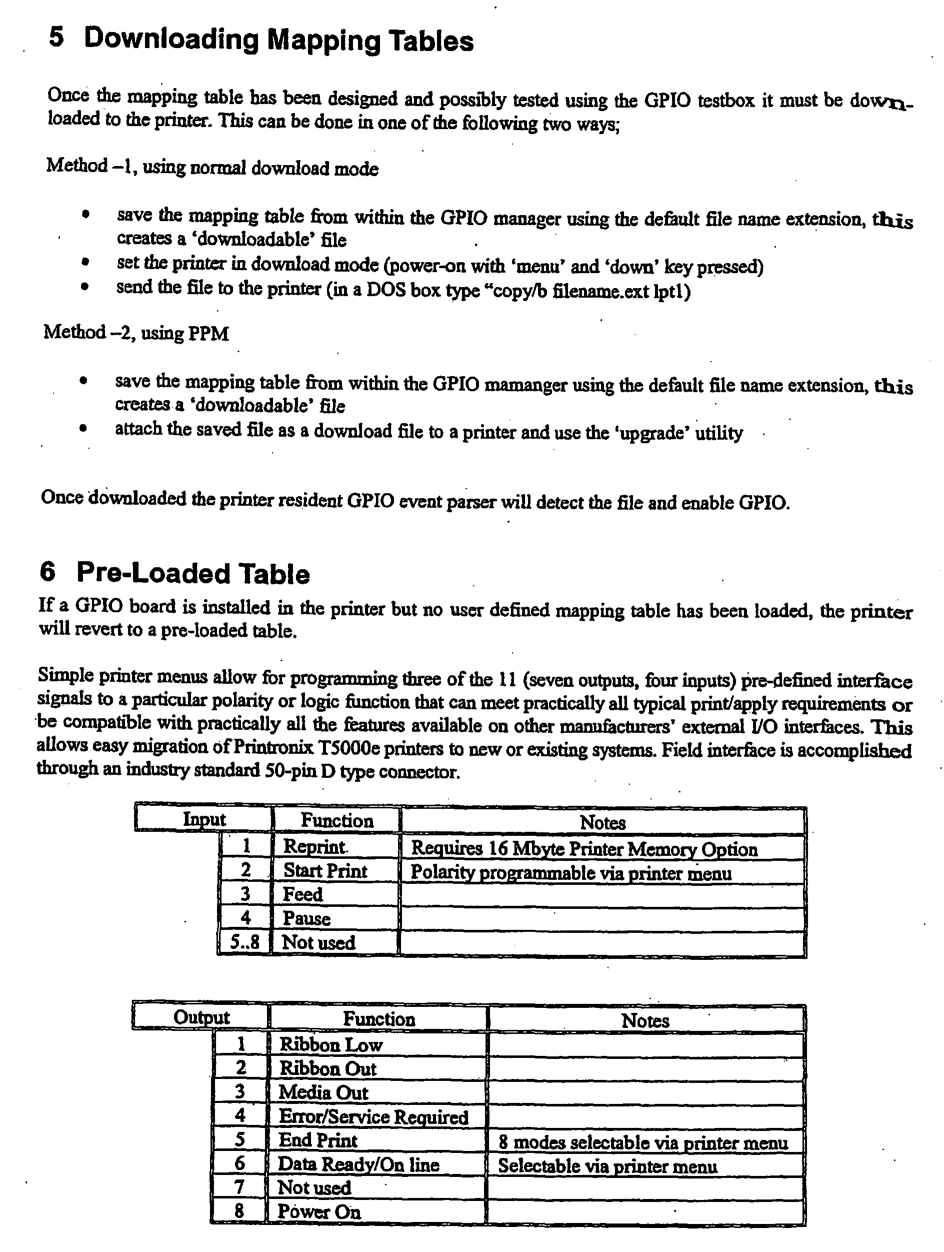

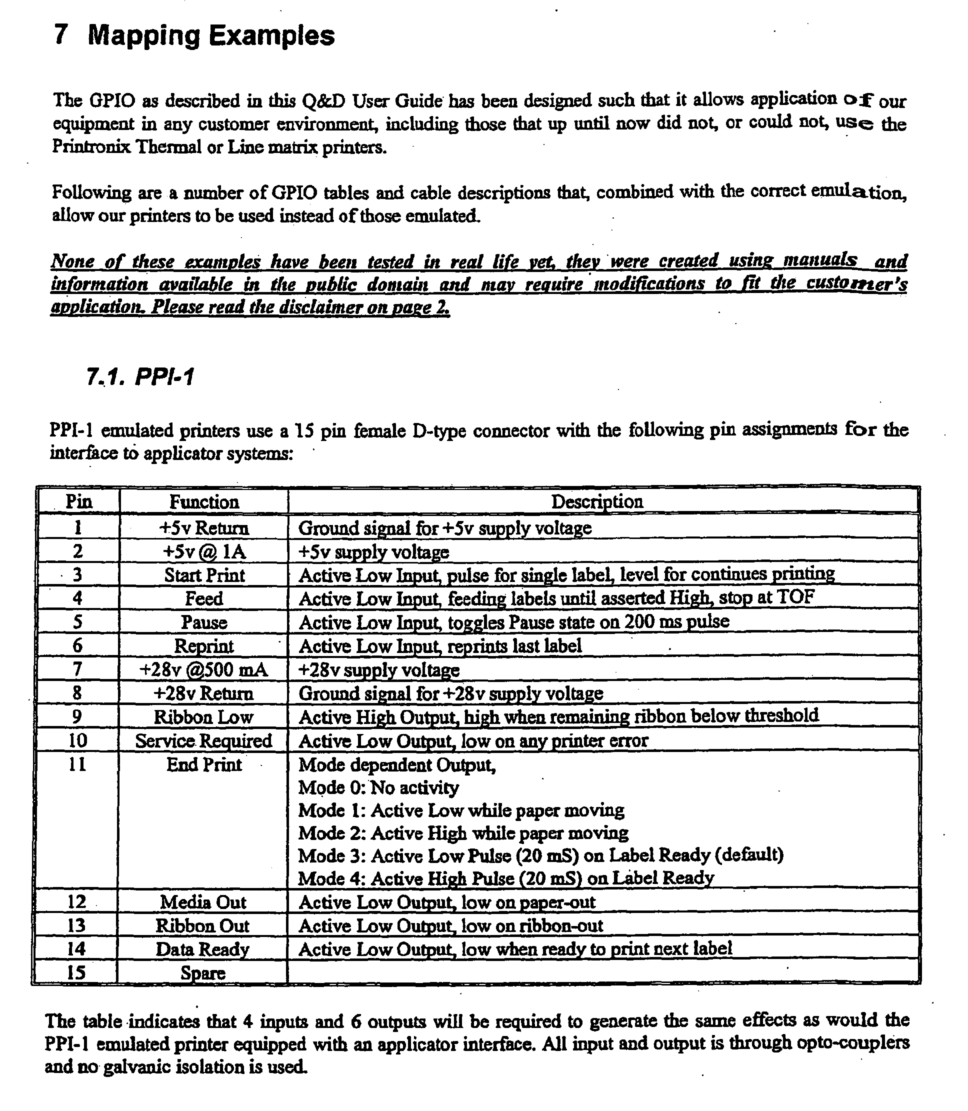

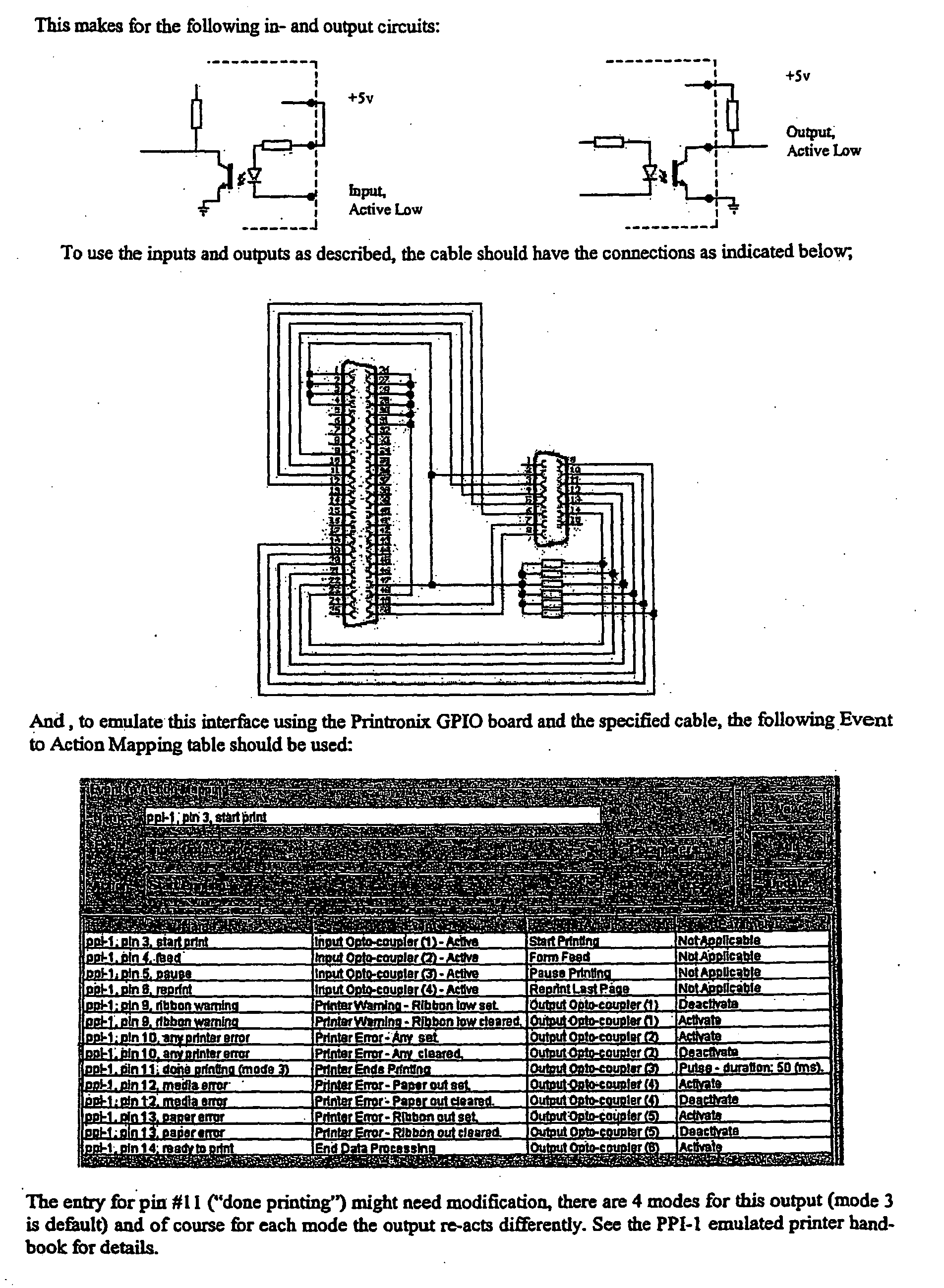

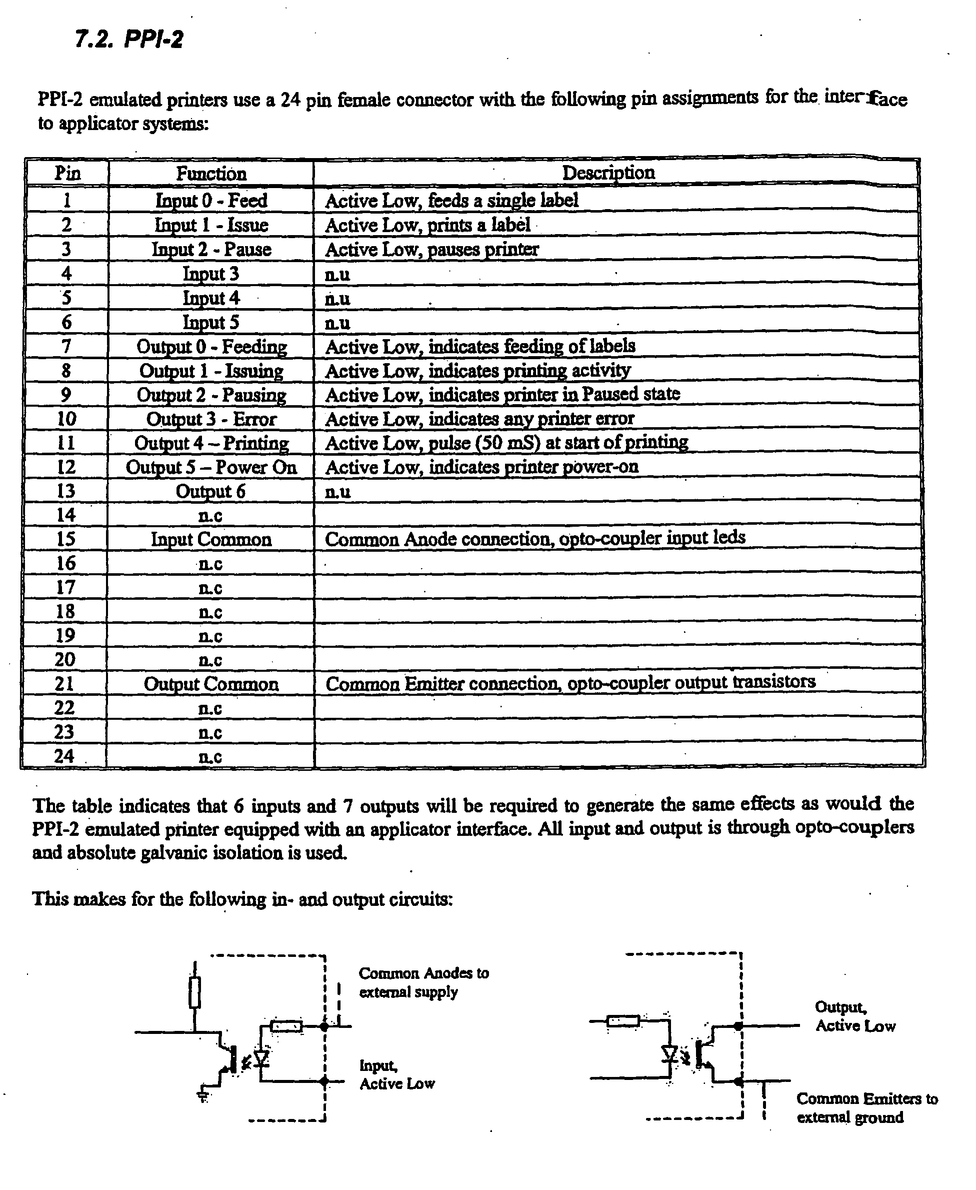

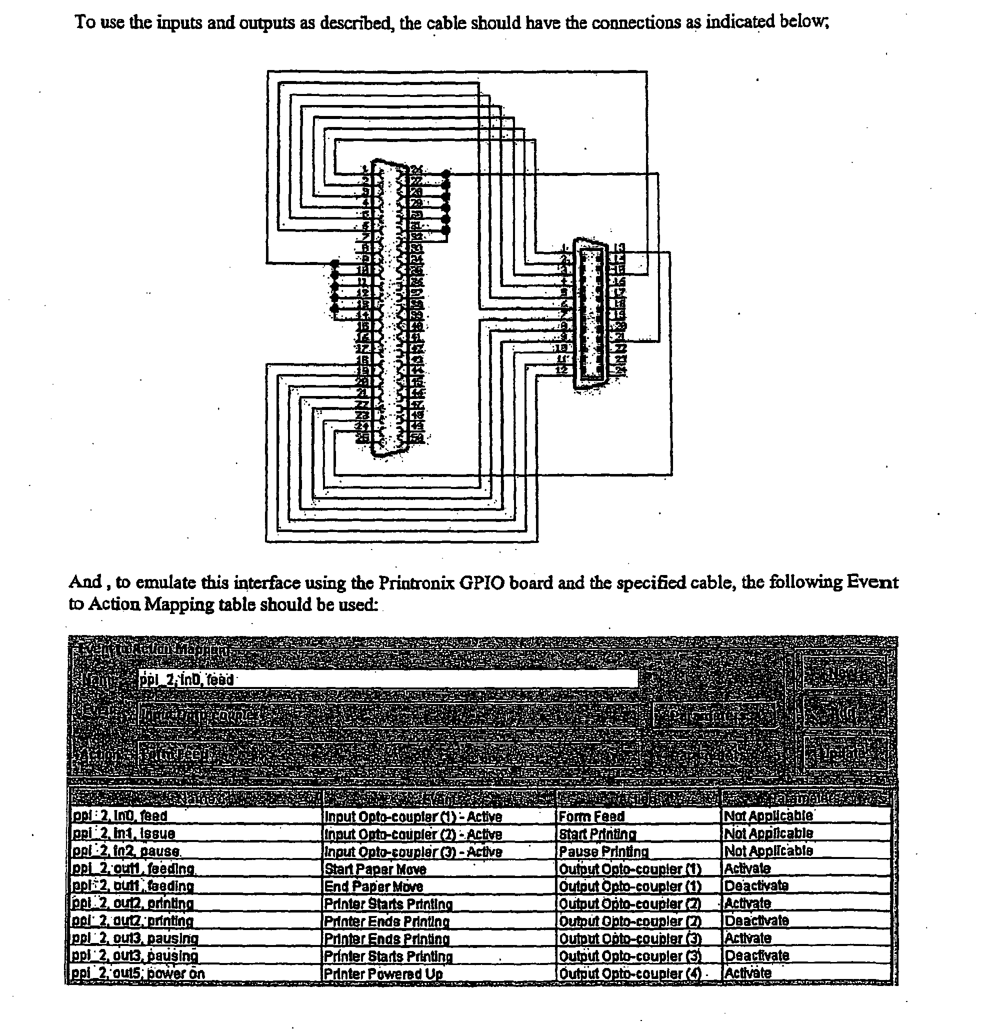

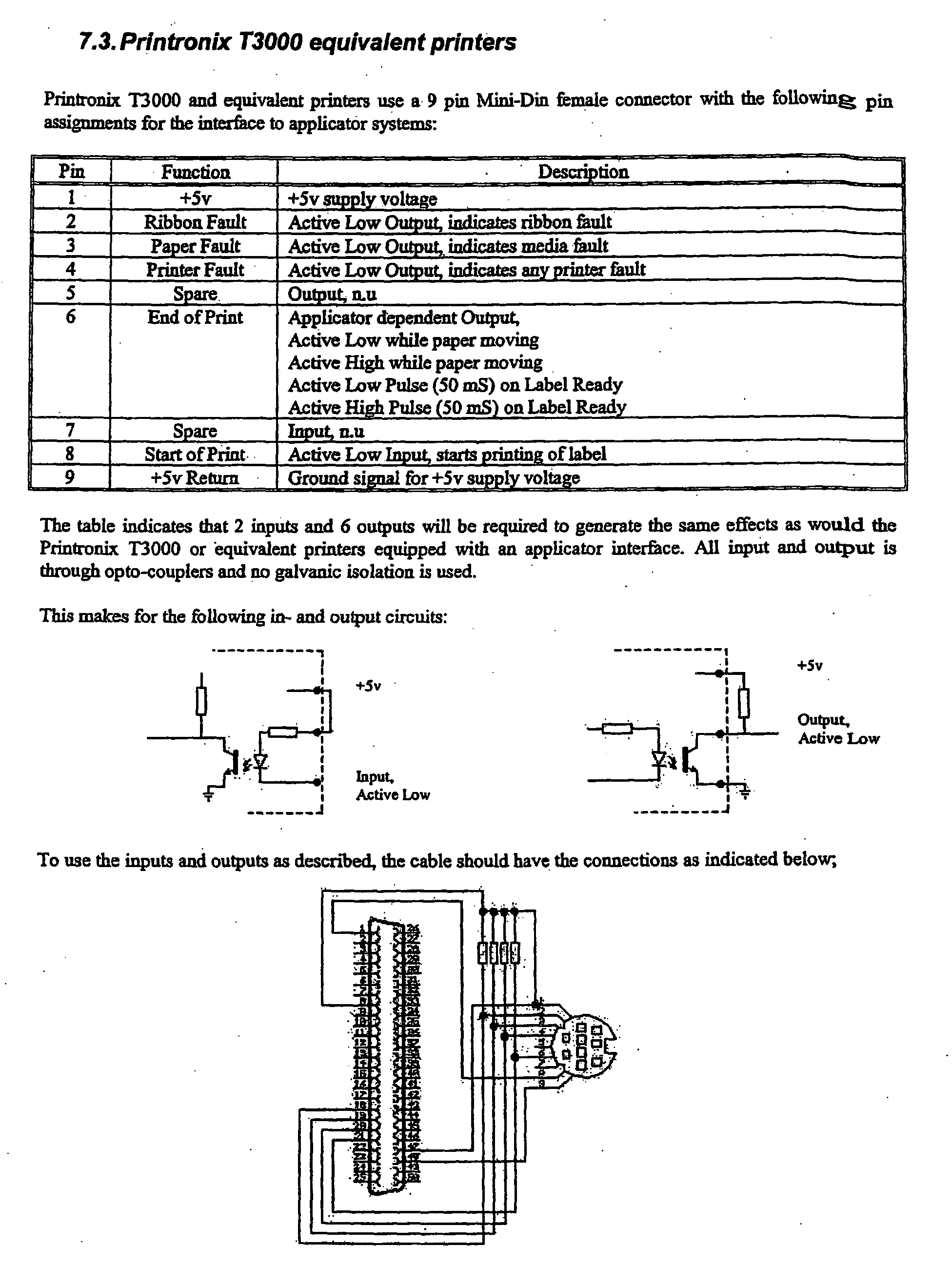

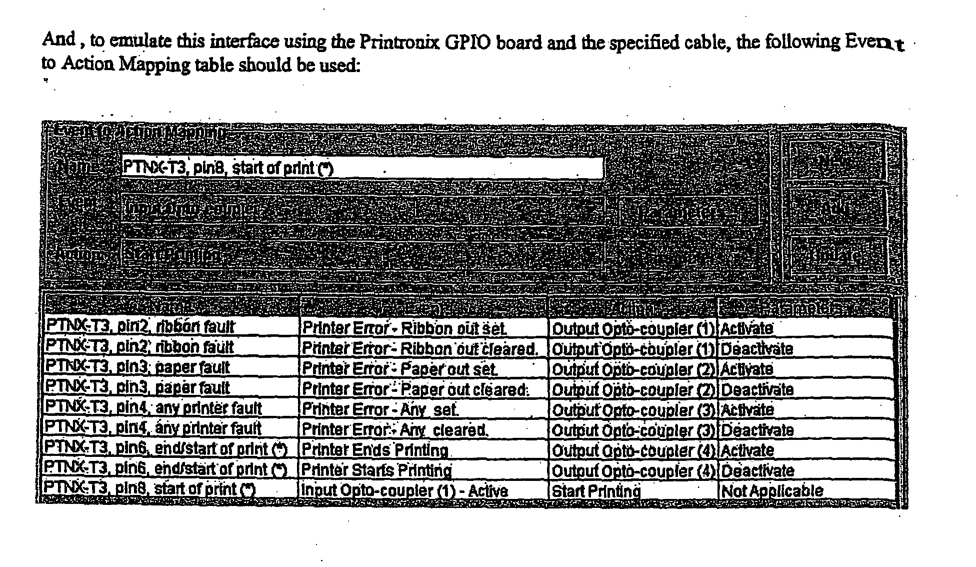

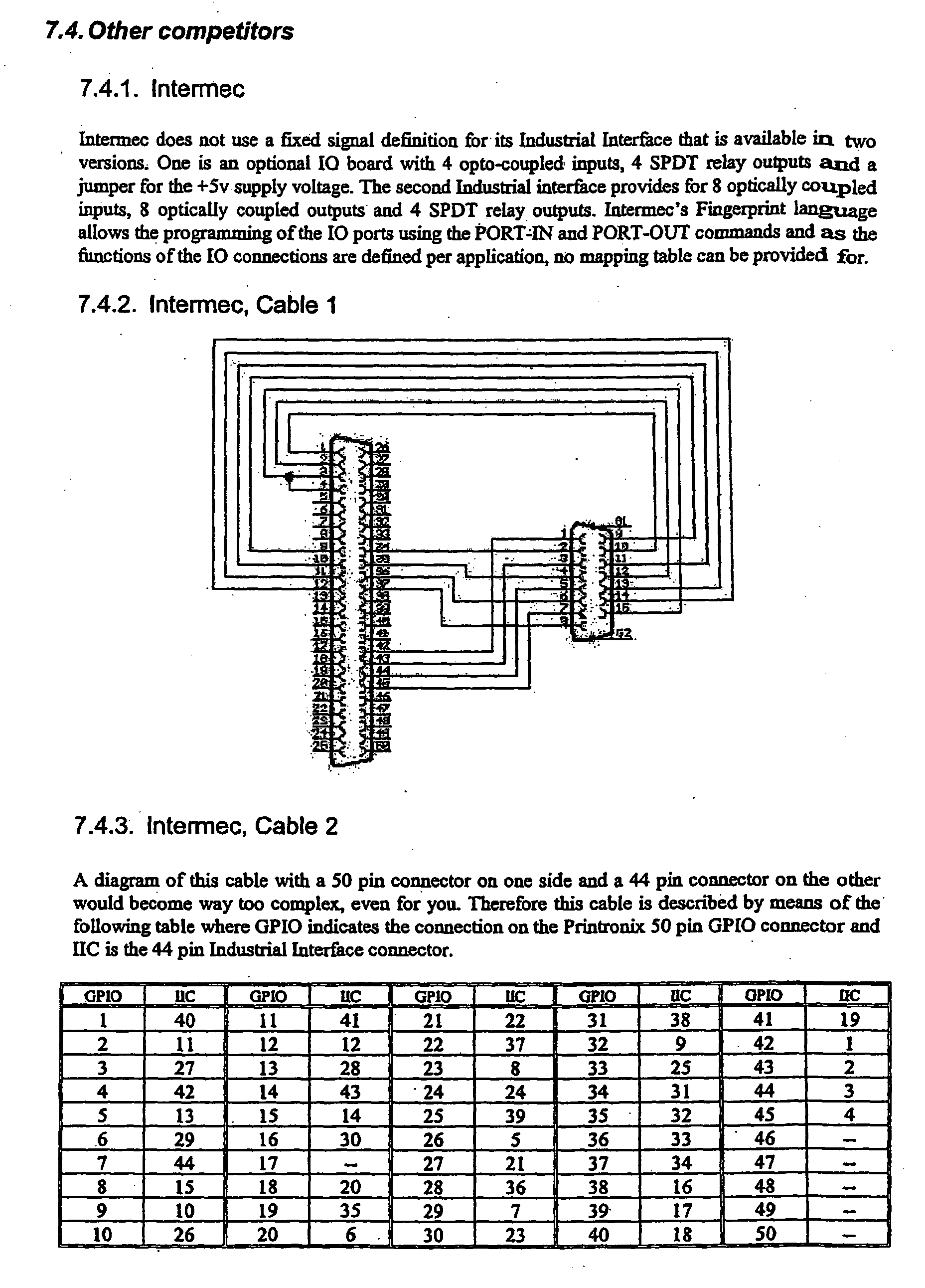

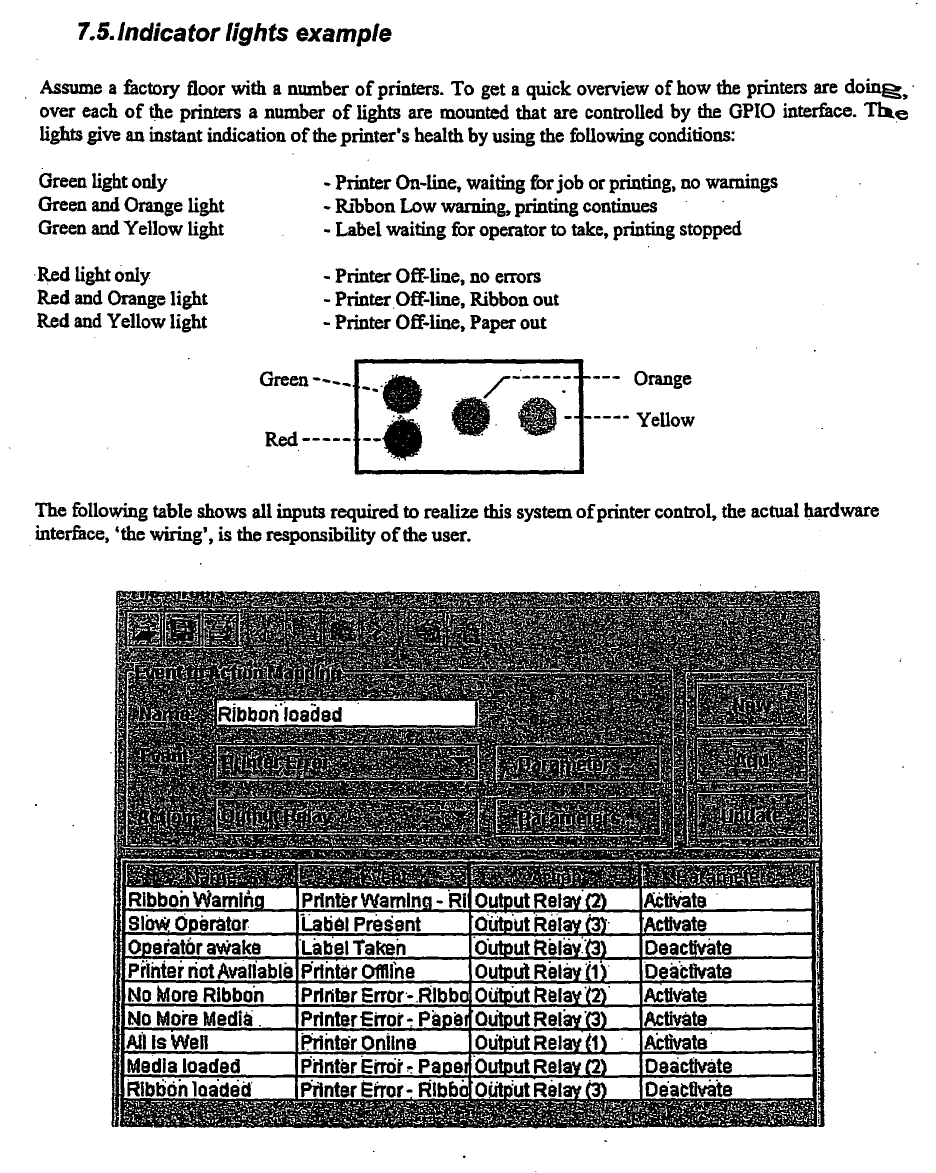

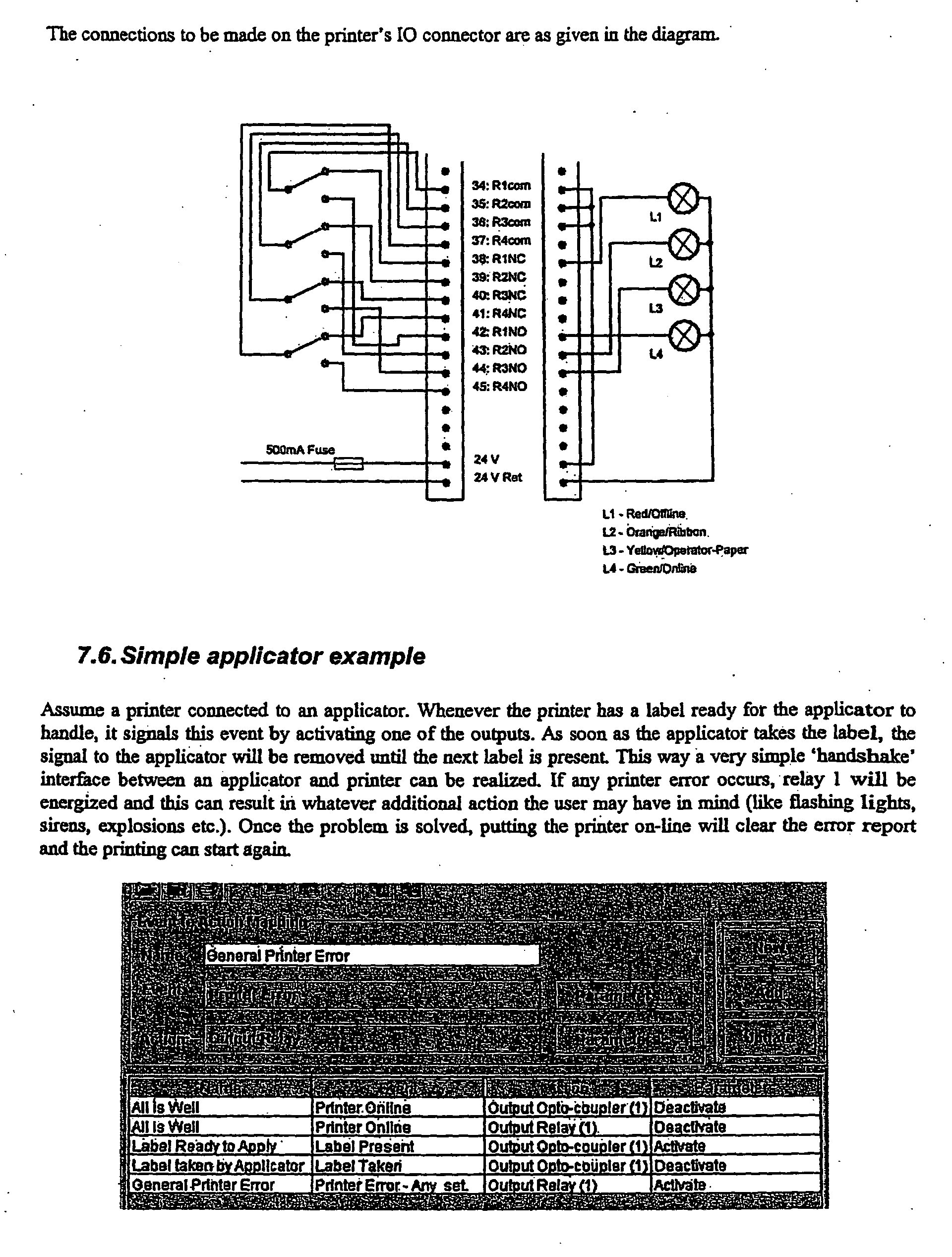

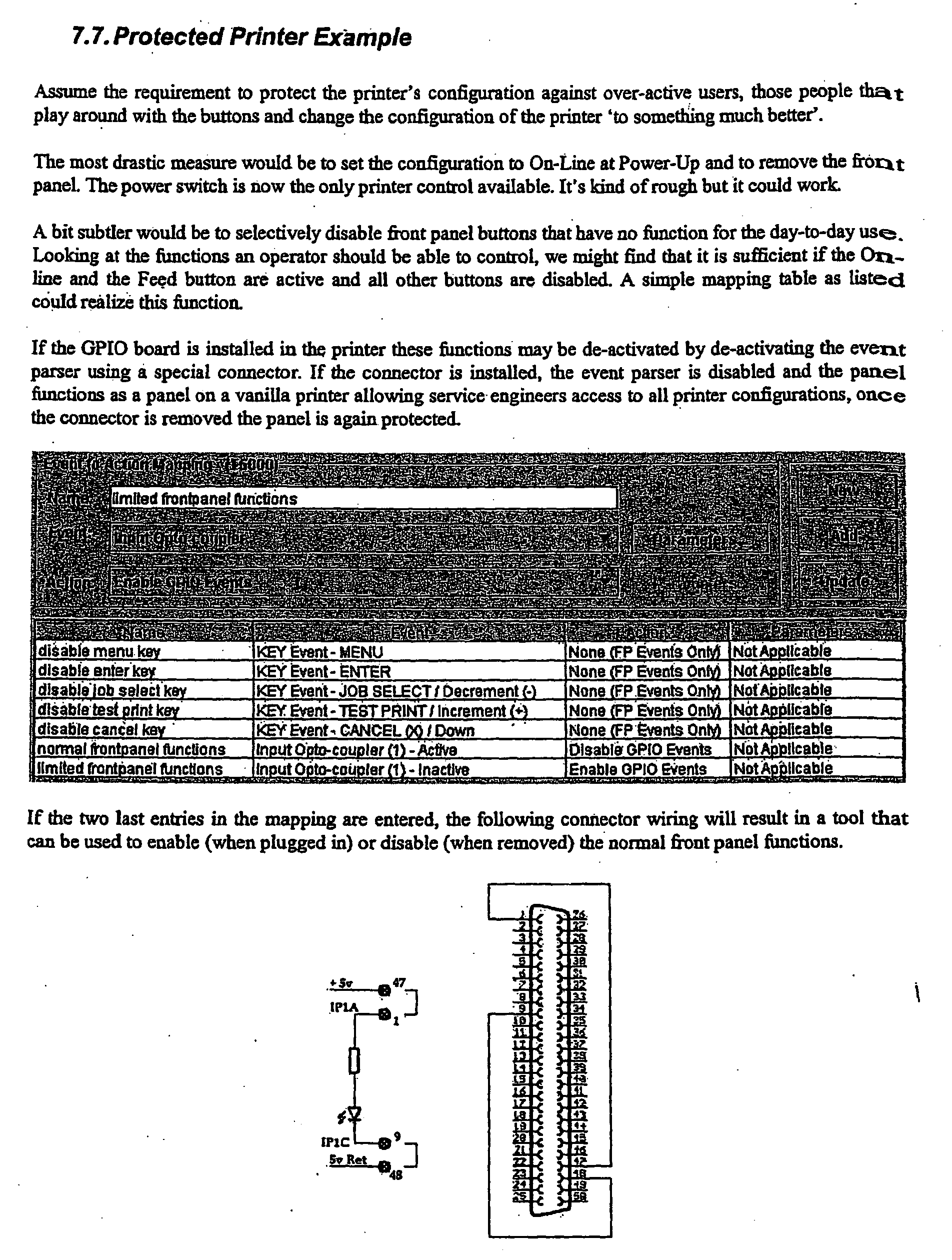

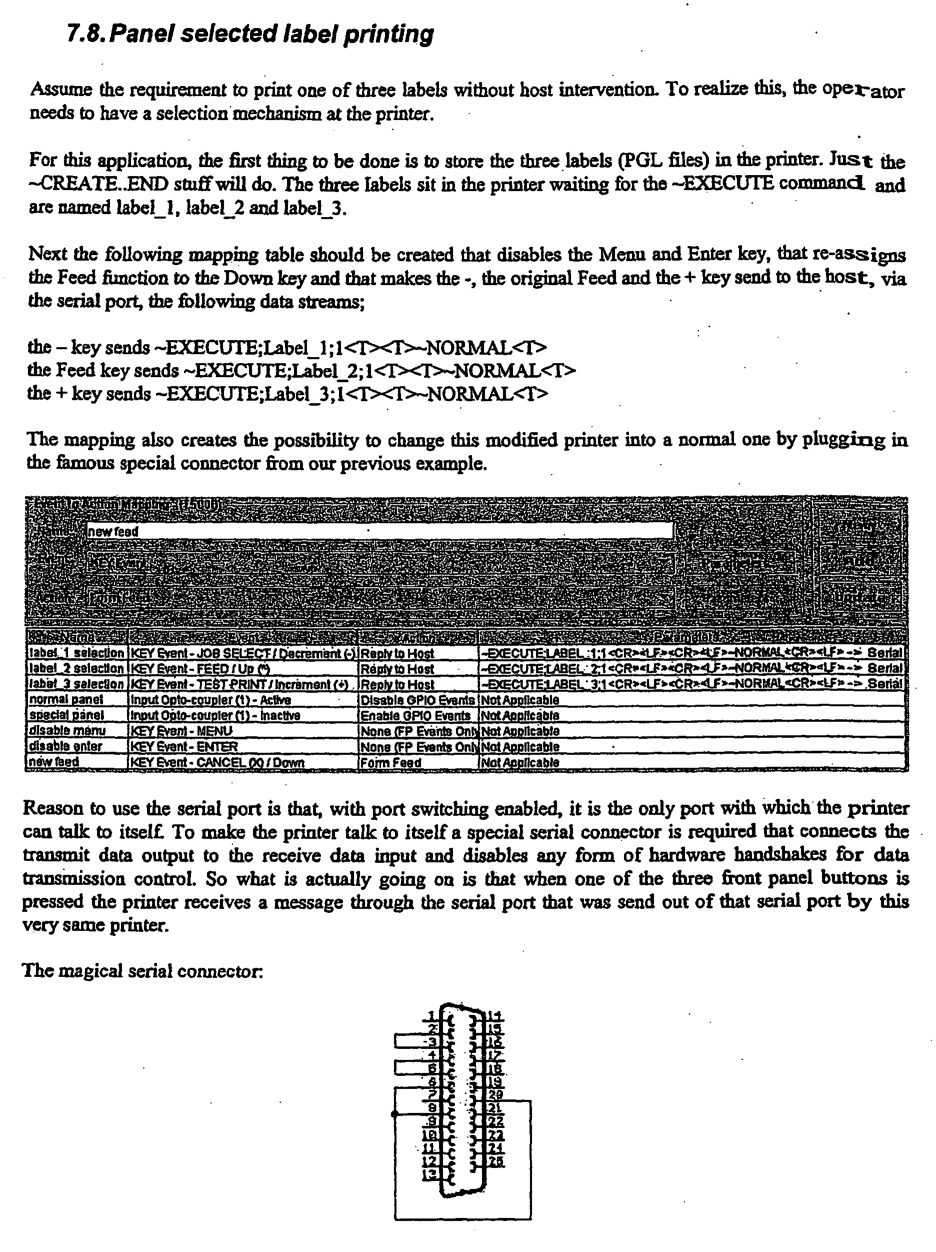

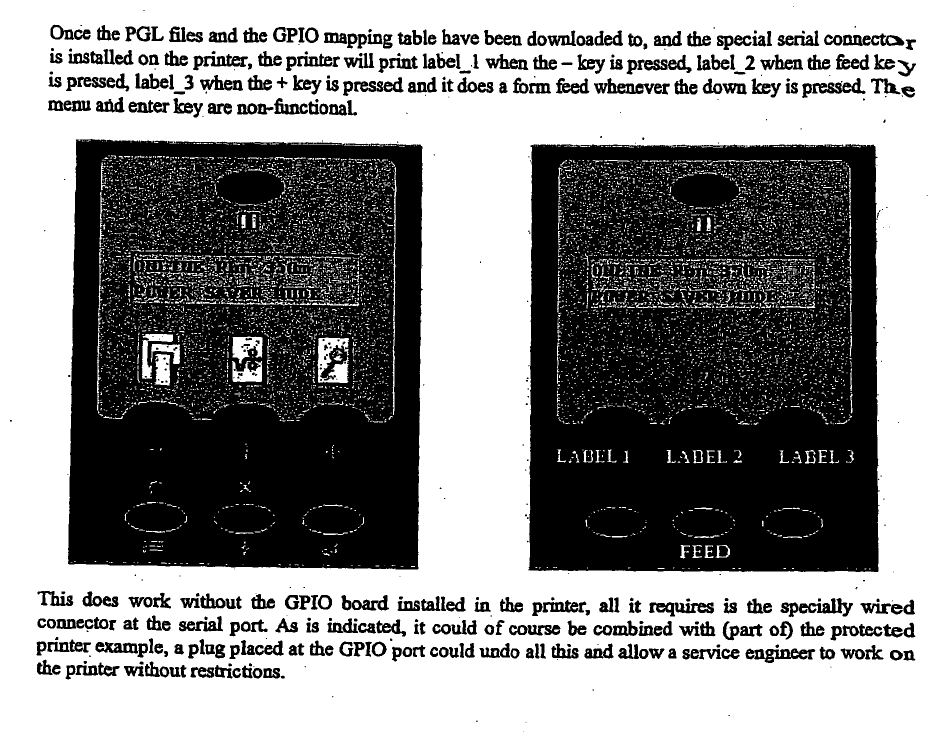

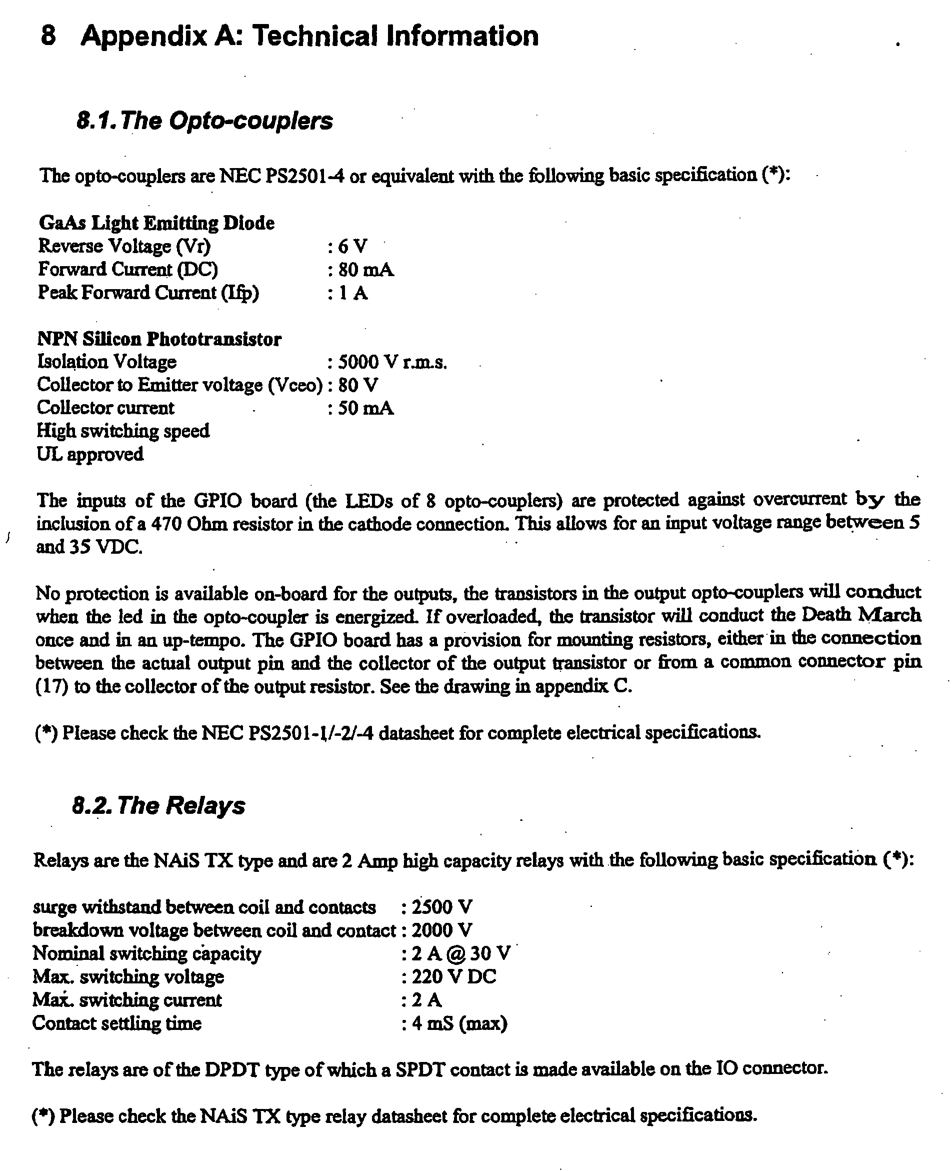

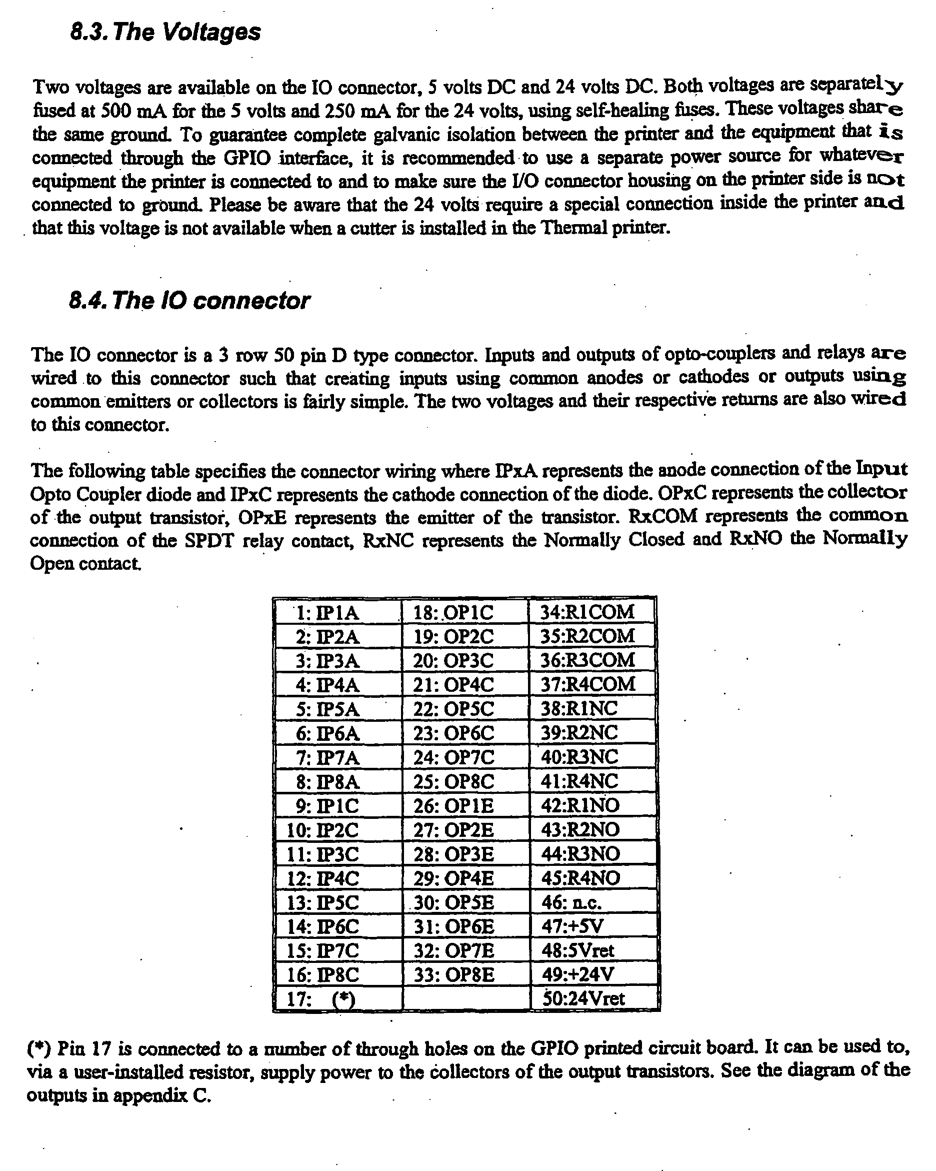

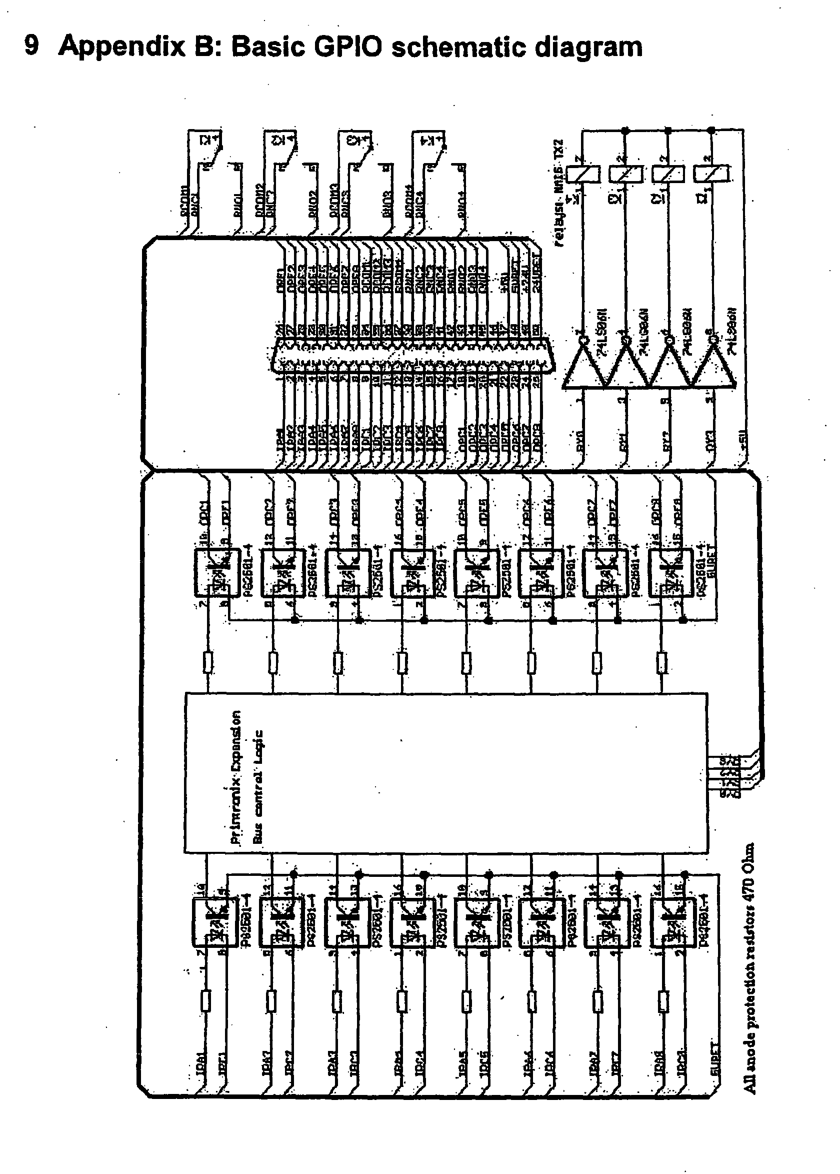

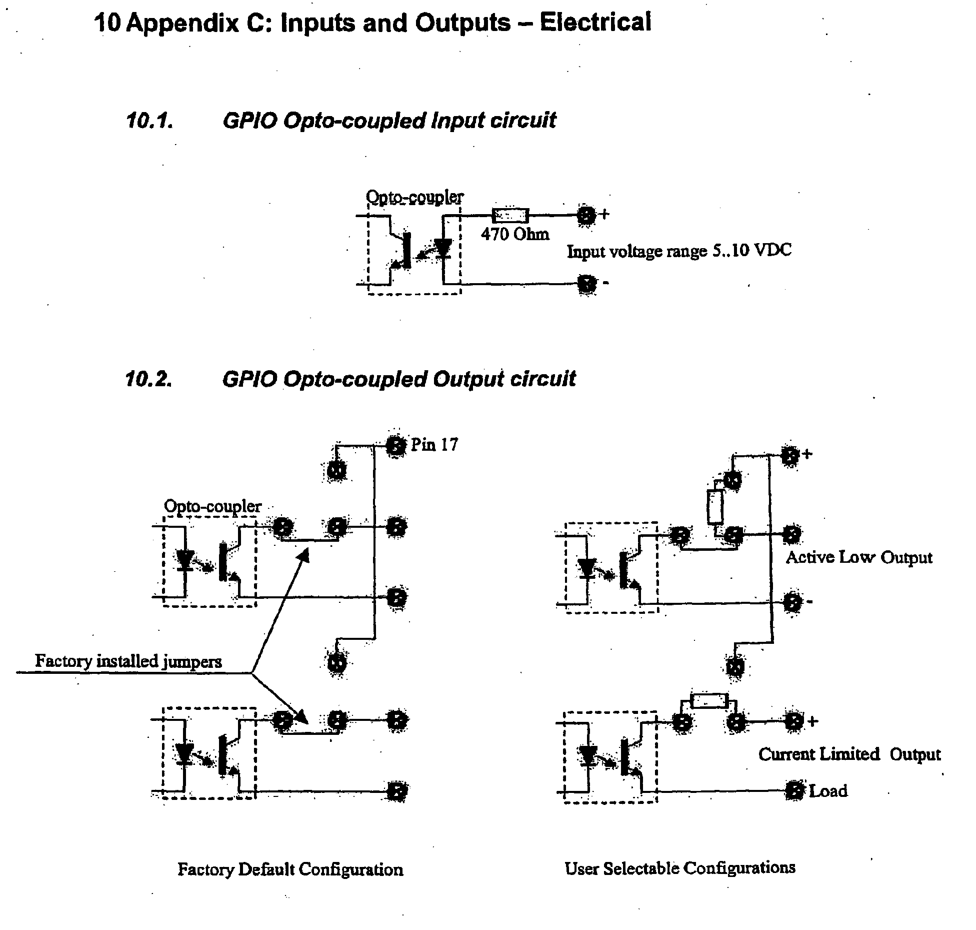

## Claims

1. A method of managing a printer system, comprising:
connecting a first printer to a second printer; and
determining the actions of each printer based on events.

2. The method of claim 1, wherein the first printer is an RFID-enabled printer and the second printer is a bar-code printer.

3. The method of claim 2, wherein the determining comprises:
determining the type of data stream used for printing; and
selecting the appropriate printer for printing.

4. The method of claim 3, wherein determining the type comprises detecting an RFID command in the data stream.

5. A printer system, comprising:
a first printer of a first type;
a second printer of a second type; and
means for managing the first and second printer based on events.

6. The printer system of claim 5, wherein the first type and second type are the same.

7. The printer system of claim 5, wherein the first type and second type are different.

8. The printer system of claim 7, wherein the first type is an RFID printer, and the second type is a bar code printer.

9. The printer system of claim 5, wherein the means for managing comprises a general purpose input/output (GPIO) device.

10. The printer system of claim 9, wherein the GPIO device comprises a hardware portion comprising inputs and outputs and a software portion comprising an event parser and a mapping table.

11. The printer system of claim 10, wherein the inputs and outputs are optically coupled.

12. A printer system, comprising:
an RFID printer;
a printer to print optically readable images; and
a means for detecting print data type and controlling whether the RFID printer or the printer prints the data.

13. The printer system of claim 12, wherein the optical image printer is a bar code printer.
